# EUROPÄISCHE PATENTSCHRIFT

(11) **EP 2 033 707 B1**
(45) Veröffentlichungstag und Bekanntmachung des Hinweises auf die Patenterteilung: **09.03.2011**
(21) Anmeldenummer: 08015040.2
(22) Anmeldetag: 26.08.2008
(51) Int. Cl.: B01F 3/12

(54) **Verfahren zur Herstellung einer homogenen flüssigen Mischung**
Method for manufacturing a homogenous fluid mixture
Procédé de fabrication d'un mélange liquide homogène

(30) Priorität: 07.09.2007 DE 102007042514
(43) Veröffentlichungstag der Anmeldung: 11.03.2009
(73) Patentinhaber: Merck Patent GmbH, 64293 Darmstadt (DE)
(72) Erfinder: Grund, Michael, Dr., 64342 Seeheim-Jugenheim (DE); Haeberl, Michael, Dr., 64807 Dieburg (DE); Hauke, Guenter, 64367 Muehtal (DE); Muntermann, Hans, 63225 Langen (DE); Oldenburg, Nils, Dr., 64665 Alsbach-Haehnlein (DE); Roemer, Michael, Dr., 63110 Rodgau (DE); Marie, Sebastien, 64291 Darmstadt (DE); Rhein, Rudolf, 64646 Heppenheim (DE); Diez, Laetizia Garcia, 64283 Darmstadt (DE); Wichmann, Martin, 64291 Darmstadt (DE)

(56) Entgegenhaltungen:
- EP-A- 1 213 314
- WO-A-01/62374
- WO-A-2004/037900
- WO-A-2006/008590
- DE-A1-102004 030 315
- DE-C- 489 223
- US-A- 4 952 334
- DOMAN M ET AL: "FLOSSENSCHLAG EINES DELPHINS. ÖSWING - DER FESTSTOFF-MISCHER FUR HOHE ANSPRUCHE" CHEMIETECHNIK, HUTHIG, HEIDELBERG, DE, Bd. 23, Nr. 4, 1. April 1994 (1994-04-01), Seiten 96-98, XP000447822 ISSN: 0340-9961

## Beschreibung

Die vorliegende Erfindung betrifft ein Verfahren zur Herstellung einer homogenen flüssigen Mischung aus mindestens zwei organischen Substanzen, wobei mindestens eine der beteiligten Substanzen bei Raumtemperatur in fester Form vorliegt.

Dabei bedeutet eine flüssige Mischung eine fluide Mischung, d. h., sowohl eine flüssigkristalline Mischung, als auch eine isotop flüssige Mischung, bevorzugt eine flüssigkristalline Mischung.

In der chemischen und pharmazeutischen Industrie besteht das Bedürfnis möglichst schnell, gleichzeitig jedoch aber schonend und zuverlässig, eine möglichst homogene flüssige Mischung aus mehreren beteiligten Ausgangssubstanzen herzustellen.

Handelt es sich bei den zu mischenden Substanzen zumindest teilweise um Feststoffe, so hat es sich in der Praxis etabliert und bewährt, die beteiligten Ausgangsstoffe entweder getrennt voneinander vor dem Vermischen oder aber zu Beginn des Mischvorgangs in einem Mischbehälter durch externe Wärmezufuhr zu erhitzen, bis sich sämtliche beteiligten Feststoffe verflüssigt haben. Die dann in flüssiger Form vorliegenden Substanzen können anschließend mit einem mechanisch oder magnetisch betriebenem Rührwerk vermengt werden, bis die gewünschte Homogenisierung der in flüssiger Form vorliegenden beteiligten Substanzen vorliegt. Um den Übergang der Feststoffe in die flüssige Phase zu erleichtern, wird häufig im Stand der Technik auch ein zusätzliches Lösemittel zugefügt, dass dann hinterher wieder entfernt werden muss.

Durch die Zuführung externer Wärmeenergie, beispielsweise durch Erhitzen des Mischbehälters mittels Heizspiralen oder in einem Ofen, wird der für die homogene flüssige Mischung erforderliche Übergang der Feststoffe in die flüssige Phase beschleunigt. Insbesondere für Ausgangsstoffe oder Endprodukte, die ausreichend temperaturbeständig sind, werden derartige Herstellungsverfahren mit einem kontrolliertem Erhitzen der Ausgangsstoffe oder der bereits vermischten Substanzen nahezu ausnahmslos angewendet.

Es hat sich jedoch gezeigt, dass bei der Durchführung derartiger Herstellungsverfahren eine zum Teil aufwendige Temperatursteuerung bzw. Temperaturkontrolle erforderlich wird, sobald eine der beteiligten Ausgangsstoffe oder Endprodukte in dem relevanten Temperaturbereich eine merkliche Temperaturabhängigkeit bzw. temperaturabhängige Eigenschaften oder ein temperaturabhängiges Reaktionsverhalten aufweist, wie z.B. in der EP 1 213 314 A1 beschrieben. In diesen Fällen muss sichergestellt werden, dass sich die Temperatur der beteiligten Substanzen vor und während des Mischvorgangs innerhalb eines zulässigen Temperaturbereichs bewegt und dass die extern zugeführte Wärmeenergie nicht eine übermäßige Erhitzung der beteiligten Substanzen bewirkt.

Dies ist insbesondere dann aufwendig und in manchen Fällen kaum zuverlässig möglich, wenn durch den apparativen Aufbau ein lokales Temperaturgefälle innerhalb des Mischbehälters bzw. innerhalb der zu mischenden Substanzen nicht ausgeschlossen werden kann.

Darüber hinaus hat sich gezeigt, dass lokale Temperaturunterschiede innerhalb der zu mischenden Substanzen während des Mischvorgangs ebenso wie eine zu starke Erhitzung während des Mischvorgangs, insbesondere bei einer Mischung mit organischen Substanzen, dazu führen kann, dass sich die gewünschte Homogenität der Mischung nicht oder nur nach einer langen Mischdauer einstellt. Weiterhin ist das Eintragen von Verunreinigungen über Abrieb aufeinander bewegter Oberflächen und aus unvollständiger Reinigung, bzw. Rückständen aus der Reinigung, ein signifikantes Problem.

Die Verwendung eines Lösemittels kann in einigen Fällen zu besseren Mischergebnissen führen. Der zusätzliche Zeitaufwand und die anfallenden Kosten für das Lösemittel bzw. die anschließende aufwendige Separation und Extraktion des Lösemittels aus der homogenen flüssigen Mischung werden jedoch als nachteilig empfunden, bzw. führen bei nicht vollständiger Entfernung zu Verunreinigungen in der homogenisierten Mischung.

Aufgabe der vorliegenden Erfindung ist es ein Verfahren zur Herstellung einer homogenen flüssigen Mischung zu finden, wobei die Ausgangssubstanzen überwiegend oder zumindest zum Teil in fester Form, vorzugsweise kristallin vorliegen, dass die oben beschriebenen Nachteile nicht aufweist. Die gewünschte homogene flüssige Mischung sollte dabei möglichst schnell, jedoch auch zuverlässig und kostengünstig, hergestellt werden.

Überraschenderweise wurde nun ein Mischverfahren gefunden, wobei sich die Ausgangssubstanzen (mindestens zwei Substanzen) bei einer Temperatur, die geringer ist als die Schmelztemperatur der mindestens einer in fester Form vorliegenden Substanz, verflüssigen und gleichzeitig homogenisiert werden. Durch ein in geeigneter Weise durchgeführtes Vermengen von einem oder mehreren Feststoffen wird in vergleichbar kurzer Zeit eine homogene flüssige Mischung hergestellt, ohne dass die beteiligten Feststoffe durch die Zuführung von externer Energie oder mit einem mechanischen Rührwerk in die flüssige Phase überführt werden. Durch geeignete intensive Bewegung des Mischbehälters erfolgt eine Intensivierung des Stoffaustauschs an den Phasengrenzen der Substanzen untereinander, woraus eine Schmelzpunkterniedrigung gegenüber den Einzelsubstanzen und damit der Übergang in die flüssige Phase resultiert. Weiterhin erfolgt durch die auftretende Wandreibung die Homogenisierung der flüssigen Phase.

Gegenstand der Erfindung ist somit ein Verfahren zur Herstellung einer homogenen flüssigen Mischung aus mindestens zwei organischen Substanzen, dadurch gekennzeichnet, dass mindestens eine der beteiligten Substanzen bei Raumtemperatur in fester Form vorliegt und die zu mischenden Substanzen bei einer Temperatur, die geringer als die Schmelztemperatur der mindestens einer in fester Form vorliegenden Substanz ist, durch intensives Vermengen in einer rotierenden Mischtrommel (4) verflüssigt und homogenisiert werden.

Von Vorteil bei dem erfindungsgemäßen Verfahren ist, dass weder externe Wärme zugeführt werden muss, noch ein Lösemittel benötigt wird. Die zusätzlichen Verfahrensschritte und apparativen Anforderungen für eine externe Wärmezufuhr bzw. die Zugabe und anschließende Extraktion eines Lösemittels können vermieden werden, so dass das Mischverfahren für die zu mischenden Substanzen einerseits sehr schonend ist und durch das Ausbleiben eines Lösemittels keine Verunreinigungen in die Mischung eingetragen werden und andererseits sehr kostengünstig ist. Darüber hinaus muss keine Verunreinigung der homogenen flüssigen Mischung durch ein Lösemittel oder durch lokale Wärmegradienten während des Mischvorgangs befürchtet werden. Auf diese Weise sind lokale Inhomogenitäten bei der Vermischung oder beispielsweise ein Anbacken einzelner Substanzen oder der vermengten flüssigen Mischung an erhitzten Wänden des Mischbehälters nahezu ausgeschlossen. Verunreinigungen aus der Reibung bewegter Oberflächen entfallen.

In einer bevorzugten Ausführungsform handelt es sich bei dem Mischbehälter um einen Schwingungsmischer, wie sie üblicherweise bei der Herstellung von Farben verwendet werden. Geeignete Schwingungsmischer können handelsüblich erworben und gegebenenfalls nach geringfügigen Modifikationen zu dem erforderlichen Vermengen der beteiligten Substanzen verwendet werden.

Es hat sich als besonders vorteilhaft herausgestellt, dass die zu mischenden Substanzen mittels einem rotierenden Mischbehälter, z.B. einer rotierenden Mischtrommel, vermengt werden. Geeignete Mischbehälter, insbesondere Mischtrommeln, sind insbesondere solche, die möglichst glattwandige Innenflächen aufweisen, und somit schnell und zuverlässig befüllt bzw. entleert werden können. Die Reinigung derartiger Mischtrommeln ist schnell und zuverlässig durchführbar. Verunreinigungen der in der Mischtrommel vermengten Mischungen können selbst bei mehrfacher Verwendung der Mischtrommel mit einem geringen Reinigungsaufwand ausgeschlossen werden. Die vorgegebene oder gewünschte Reinheit der flüssigen Mischung kann deshalb kostengünstig gewährleistet werden.

In Abhängigkeit von den verwendeten Ausgangsstoffen kann es zweckmäßig sein, dass die Mischtrommel an den Wänden und/oder an einem Verschlussdeckel und/oder am Boden nach innen ragende Ausformungen aufweist. Durch geeignete nach innen ragende Einbauten und/oder Stromstörer, wie beispielsweise Lamellen oder gelochte Flächenelemente, können zusätzliche Verwirbelungen erzwungen werden, die das Vermengen und die dadurch bewirkte Homogenisierung der flüssigen Mischung begünstigen.

Gemäß einer besonders bevorzugten Ausführungsform ist vorgesehen, dass die zu mischenden Substanzen in einem Mischbehälter durch biaxiales Verschwenken oder Rotieren mechanisch vermengt werden. Ein geeigneter Mischbehälter kann dabei eine bereits beschriebene Mischtrommel oder aber ein im Wesentlichen eckiger bzw. komplex geformter Hohlkörper sein. Es hat sich gezeigt, dass bei Verwendung einer biaxial rotierenden Mischtrommel mit Umdrehungszahlen im Bereich zwischen 150 und 350 Umdrehungen pro Minute um die jeweilige Rotationsachse eine vorgegebene Homogenisierung deutlich schneller erreicht werden kann als bei der Durchführung der bereits bekannten konventionellen Verfahren, die eine externe Wärmezufuhr und eine dadurch bewirkte Verflüssigung der beteiligten Feststoffe voraussetzen.

Die Vorteile des vorangehend beschriebenen Verfahrens eines mechanischen Vermengens und der Homogenisierung einer flüssigen Mischung treten insbesondere dann ein, wenn die mindestens zwei organischen Substanzen jeweils mesogene Verbindungen sind.

Es hat sich gezeigt, dass die Verwendung des beschriebenen Herstellungsverfahrens besonders vorteilhaft für die Herstellung von Flüssigkristallmischungen ist, die ihrerseits in elektrooptischen Displays verwendet werden können.

Flüssigkristallmischungen bestehen in der Regel aus 2-40 mesogenen Einzelsubstanzen. Die Einzelsubstanzen sind in der Regel bei Raumtemperatur kristallin, amorph fest (glasförmig), flüssigkristallin (z.B. nematisch oder smektisch), hochpastös oder flüssig.

Die Herstellung von Flüssigkristallmischungen erfolgt in der Regel in der Weise, dass die gewünschte Menge der in geringerer Menge verwendeten Komponenten in der den Hauptbestandteil ausmachenden Komponenten gelöst wird, zweckmäßig bei erhöhter Temperatur. Es ist auch möglich, Lösungen der Komponenten in einem organischen Lösungsmittel, z.B. in Aceton, Chloroform oder Methanol, zu mischen und das Lösemittel nach Durchmischung wieder zu entfernen, beispielsweise durch Destillation.

Die Herstellung einer Flüssigkristallmischung nach dem erfindungsgemäßen Verfahren aus 2-40, vorzugsweise 5-20, Einzelsubstanzen erfolgt, indem alle Einzelsubstanzen und ggf. Additive, wie z.B. Dotierstoffe, dichroitische Farbstoffe und/oder Stabilisatoren, in den Mischbehälter, vorzugsweise in eine Mischtrommel, gegeben werden und sich die organischen Substanzen durch die intensive Strömung in der Mischtrommel, vorzugsweise durch biaxiales Mischen, ineinander lösen.

Im Vergleich zu den herkömmlichen Verfahren bei der Herstellung von Flüssigkristallmischungen ist die Homogenisierung der Einzelsubstanzen deutlich besser. Durch die materialschonende, intensive Durchmischung im geschlossenen Gefäß wird eine Schaumbildung weitgehend unterdrückt, entsteht mehr Prozesssicherheit, Zeit- und damit Kostenersparnis und eine höhere Reinheit der Produkte, da Verunreinigungen und Zersetzungsprozesse deutlich reduziert werden.

Vorzugsweise wird das Verfahren ohne Zugabe von organischen Lösungsmitteln durchgeführt, auch ohne Wasser. Bevorzugt wird das Verfahren auch ohne direkte Wärmezufuhr, besonders ohne Konvektionswärme durch die Gefäßwand, z. B. durch einen Heizmantel, durchgeführt.

Als der Feststoffanteil soll der Gewichtsanteil der zu mischenden Komponenten bezeichnet werden, der vor dem Mischen bei der Mischtemperatur als Feststoff vorliegt. Als Feststoffe gelten alle im engeren Sinn festen Stoffe, wie kristalline und amorphe Feststoffe (Gläser), aber auch hochviskose oder pastenartige Stoffe und solche, die keine messbare Fließgeschwindigkeit aufweisen, wie beispielsweise smektische Flüssigkristalle. Bevorzugt sind die Feststoffe kristallin oder mikrokristallin und liegen als Schüttgut vor (Pulver, Granulat).

Die Mischtemperatur ist die mittlere Temperatur T_{M} aller Komponenten der Mischung, die sich einstellt, wenn alle Komponenten vor dem Homogenisieren in einem Behälter im thermischen Gleichgewicht stehen. Bevorzugt weisen alle Mischungskomponenten zu Beginn des Mischvorgangs die gleiche Temperatur auf, bevorzugt Raumtemperatur (RT, 15-30 °C, bevorzugt 23 °C), in einem Temperaturintervall von T_{M} ± 5 °C, bevorzugt T_{M} ± 3 °C. Es kann aber auch sinnvoll sein, einzelne Komponenten zu kühlen oder zu erwärmen, damit sie leichter zu handhaben sind. Die Temperatur der homogenisierten flüssigen Mischung am Ende des Verfahrens weicht in der Regel von der Mischtemperatur T_{M} ab, abhängig u. a. von der Mischungsentropie und von den Lösungsenthalpien der beteiligten Stoffe und von der zugeführten mechanischen Arbeit.

Für den Fall, dass die Mischtemperatur nicht Raumtemperatur entspricht, so liegt ein Verfahren vor, das dadurch gekennzeichnet ist, dass mindestens eine der beteiligten Substanzen bei der Mischtemperatur T_{M} vor dem Vermengen in fester Form vorliegt.

Der Feststoffanteil an den Mischungsbestandteilen liegt im Bereich von Spuren bis 100 %. Die Prozentangaben beziehen sich vor und nachstehend auf Gewichtsanteile. Bevorzugt liegt der Feststoffanteil bei 0,1 bis 100 %. Besonders bevorzugt ist ein Feststoffanteil von größer oder gleich 10 %, insbesondere 20 %, und ganz besonders von größer oder gleich 40 %. Durch den Feststoffanteil wird bei vielen Mischungen zunächst ein viskoses oder festes Gemenge erhalten, das erfindungsgemäß ohne Probleme homogenisiert werden kann.

Bevorzugt liegt der Feststoffanteil unterhalb 100 %. Die Mischungsdauer bis zur Homogenisierung lässt sich in einigen bevorzugten Fällen durch einen Anteil an nicht-kristallinen Mischungskomponenten verringern, soweit die Auswahl der Mischungskomponenten das zulässt. Bevorzugt liegt der Feststoffanteil bei kleiner oder gleich 99 %, insbesondere bei kleiner oder gleich 90 %, und ganz besonders bei kleiner oder gleich 85 % Feststoffanteil. Die restlichen Komponenten sind flüssig oder flüssigkristallin.

Die Mischungsdauer nach dem erfindungsgemäßen Verfahren ist relativ gering im Vergleich zu der Zeit, die für das vorsichtige Aufschmelzen, Verrühren und Abkühlen der Mischungskomponenten in konventioneller Weise benötigt wird. Dies macht sich besonders bei größeren Ansätzen im Kilomaßstab und darüber bemerkbar. Bevorzugt werden daher Mischungsansätze von insgesamt größer oder gleich 1 kg, insbesondere größer oder gleich 5 kg, und ganz besonders größer oder gleich 10 kg nach dem Verfahren homogenisiert.

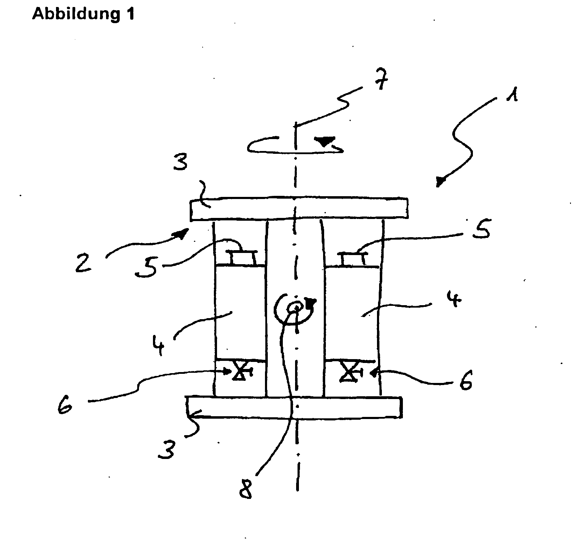

Nachfolgend wird ein Ausführungsbeispiel näher erörtert, welches in Abbildung 1 dargestellt ist.

In der Abbildung wird schematisch eine für die Durchführung des Verfahrens zur Herstellung einer homogenen flüssigkristallinen Mischung geeignete Mischvorrichtung 1 beschrieben. Die Mischvorrichtung 1 weist eine Aufnahmevorrichtung 2 mit zwei im Abstand zueinander beweglich gelagerten Halteplatten 3 auf. Zwischen den beiden Halteplatten 3 können wahlweise eine, zwei, vier oder beliebig mehrere Mischtrommeln 4 angeordnet und fixiert werden. Jede einzelne Mischtrommel 4 weist eine mit einem Deckel 5 verschließbare Einfüllöffnung und gegebenenfalls zusätzliche Einlass- oder Auslassventile 6 auf.

Vor Beginn eines Mischvorgangs werden die beteiligten Ausgangsstoffe in die Mischtrommeln 4 eingefüllt. Gegebenenfalls kann die Mischtrommel vor der Beschickung mit den organischen Substanzen und ggf. Additive temperiert werden. Die Mischtrommeln 4 werden zwischen den Halteplatten 3 in der Aufnahmevorrichtung 2 angeordnet und fixiert

Die Aufnahmevorrichtung 2 ist um zwei senkrecht zueinander stehende Achsen 7, 8 antreibbar drehbar gelagert. Durch eine Rotation der Aufnahmevorrichtung 2 um die beiden Achsen 7, 8 wird eine biaxiale Rotation aller Mischtrommeln 4 sowohl parallel zu der Symmetrieachse einer jeden Mischtrommel 4 als auch senkrecht hierzu herbeigeführt. Dies erzeugt eine intensive Strömung des Materials in der Mischtrommel. Dabei sorgen die einwirkenden Scherkräfte für eine optimale Durchmischung ohne die Eigenschaften des Mischguts zu beeinflussen. Dies ist besonders vorteilhaft bei größeren Gebindeabmessungen sowie bei kristallinen und höherviskosen organischen Substanzen. Es hat sich gezeigt, dass eine ausreichend homogene Mischung, z. B. bei der Herstellung von Flüssigkristallkristallmischungen bestehend aus 2-40, vorzugsweise 5-20, Einzelsubstanzen und ggf. Additiven, beispielsweise bei Umdrehungszahlen von 340 Umdrehungen pro Minute parallel zur Symmetrieachse der Mischtrommel 4 bzw. von 170 Umdrehungen pro Minute senkrecht hierzu, innerhalb weniger als 60 Minuten erhalten wird.

Die Mischvorrichtung kann beispielsweise mit Mischtrommeln von 50 g bis 15 kg Füllgewicht beschickt werden. Das Durchmischen größerer Mengen ist gegenüber herkömmlichen Verfahren besonders vorteilhaft durchführbar und wird nur durch die Größe der Vermengungsapparatur begrenzt.

Zweckmäßigerweise können die Eigenschaften der flüssigen Mischung und insbesondere deren Homogenität mittels Sensoren erfasst und gegebenenfalls zur Ansteuerung der Mischvorrichtung 1 bzw. zur Steuerung eines Mischvorgangs verwendet werden.

Das vorangehend beschriebene Verfahren kann besonders vorteilhaft und schonend durchgeführt werden, wenn es sich bei den mindestens zwei organischen Substanzen jeweils um mesogene, vorzugsweise flüssigkristalline, Substanzen handelt, die ausgewählt sind aus den Verbindungen der Formel I, 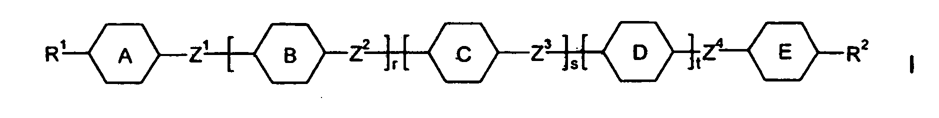 worin
- R¹ und R²: jeweils unabhängig voneinander H, einen unsubstituierten, einen einfach durch CN oder CF₃ oder mindestens einfach durch Halogen substituierten Alkylrest mit bis zu 15 C-Atomen, wobei in diesen Resten auch eine oder mehrere CH₂-Gruppen durch -O-, -S-, 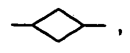 -C≡C-, -CH=CH-, -CF₂O-, -OCF₂-, -QC-O- oder -O-CO- so ersetzt sein können, dass O-Atome nicht direkt miteinander verknüpft sind, und einer der Reste R¹, R² auch F, Cl, CN, SF₅, NCS, SCN, OCN
- Ringe A, B, C, D, E: jeweils unabhängig voneinander 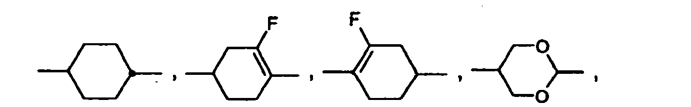 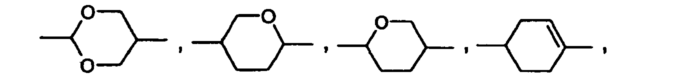 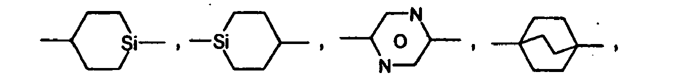 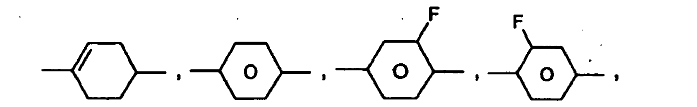 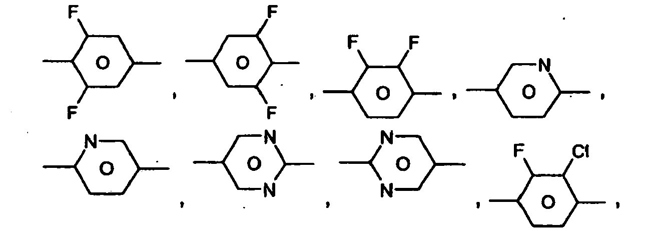 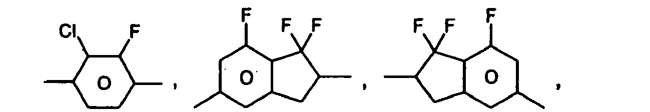 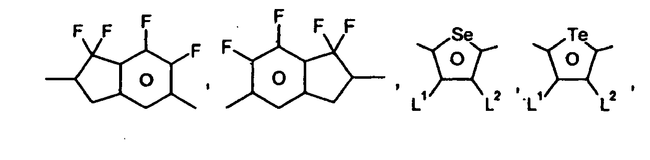 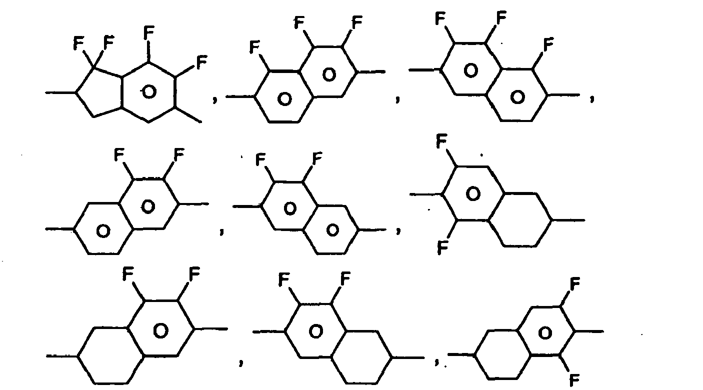 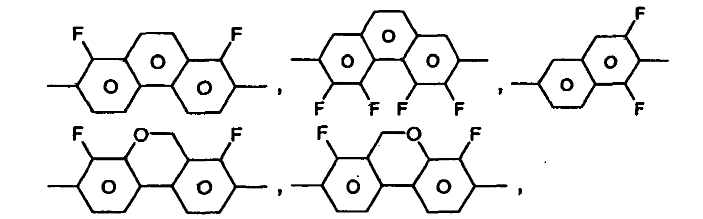 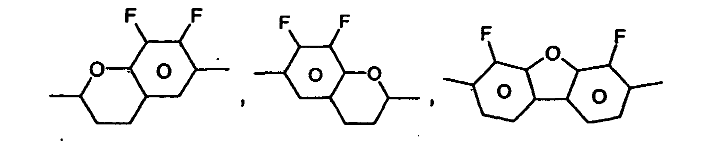
- r, s und t: jeweils unabhängig voneinander 0, 1, 2 oder 3, wobei r + s + t ≤ 3 ist,
- Z¹⁻⁴: jeweils unabhängig voneinander -CO-O-, -O-CO-, -CF₂O-, -OCF₂-, -CH₂O-, -OCH₂-, -CH₂CH₂-, -(CH₂)₄-, -CH=CH-CH₂O-, C₂F₄-, -CH₂CF₂-, -CF₂CH₂-, -CF=CF-, -CH=CF-, -CF=CH-, -CH=CH-, -C≡C- oder eine Einfachbindung,
- L¹ und L²: jeweils unabhängig voneinander H oder F
bedeuten.

Für den Fall, dass r + s + t = 0 ist, so sind Z¹ und Z⁴ bevorzugt derart ausgewählt, dass sie, wenn sie keine Einfachbindung bedeuten, nicht über zwei O-Atome miteinander verknüpft sind.

Das Verfahren wird zur Herstellung einer Mischung bestehend aus organischen Verbindungen angewandt, von denen vorzugsweise eine oder mehrere für sich mesogen, bevorzugt flüssigkristallin sind. Die mesogenen Verbindungen umfassen vorzugsweise eine oder mehrere flüssigkristalline Verbindungen. Vorzugsweise ist das Verfahrensprodukt eine homogene, flüssigkristalline Mischung. Das Verfahren umfasst im weiteren Sinn auch die Herstellung von Mischungen, die in der homogenen flüssigen Phase aus organischen Substanzen bestehen und darin unlösliche Zusätze (z. B. kleine Partikel) enthalten. Das Verfahren kann somit auch für die Herstellung von suspensionsartigen oder emulsionsartigen Mischungen basierend auf einer kontinuierlichen homogenen organischen Phase angewendet werden. Solche Verfahrensvarianten sind jedoch in der Regel weniger bevorzugt.

Mittels geeigneter Zusatzstoffe können die erfindungsgemäßen Flüssigkristallphasen derart modifiziert werden, dass sie in jeder bisher bekannt gewordenen Art von LCD-Anzeigen, z. B. von ECB-, VAN-, IPS-, FFS-, TN-, TN-TFT-, STN-, OCB-, GH-, PS-VA- oder ASM-VA-Anzeigen einsetzbar sind.

Die Flüssigkristallmischungen können auch weitere, dem Fachmann bekannte und in der Literatur beschriebene Additive, wie z. B. UV-Stabilisatoren, wie z.B. Tinuvin^{®} der Fa. Ciba, Antioxidantien, Radikalfänger, Nanopartikel, Mikropartikel, ein oder mehrere Dotierstoffe, etc. enthalten. Beispielsweise können 0-15 % pleochroitische Farbstoffe zugesetzt werden, ferner Leitwalze, vorzugsweise Ethyldimethyldodecylammonium-4-hexoxybenzoat, Tetrabutylammoniumtetraphenylboranat oder Komplexsalze von Kronenethern (vgl. z.B. Haller et al., Mol. Cryst. Liq. Cryst. Band 24, Seiten 249- 258 (1973)) zur Verbesserung der Leitfähigkeit oder Substanzen zur Veränderung der dielektrischen Anisotropie, der Viskosität und/oder der Orientierung der nematischen Phasen. Derartige Substanzen sind z. B. in den DE-OS 22 09 127, 22 40 864, 23 21 632, 23 38 281, 24 50 088, 26 37 430 und 28 53 728 beschrieben.

Geeignete Stabilisatoren und Dotierstoffe werden nachfolgend in den Tabellen C und D genannt.

In der vorliegenden Anmeldung und in den folgenden Beispielen sind die Strukturen der Flüssigkristallverbindungen durch Akronyme angegeben, wobei die Transformation in chemische Formeln gemäß folgender Tabellen A und B erfolgt. Alle Reste CₙH₂ₙ₊₁ und CₘH₂ₘ₊₁ sind geradkettige Alkylreste mit n bzw. m C-Atomen; n, m, k und z sind ganze Zahlen und bedeuten vorzugsweise 0, 1, 2, 3, 4, 5, 6, 7, 8, 9, 10, 11 oder 12. Der Ausdruck " (O)CₘH2ₘ₊₁ " bedeutet OCₘH₂ₘ₊₁ oder CₘH₂ₘ₊₁. Die Codierung gemäß Tabelle B versteht sich von selbst.

In Tabelle A ist nur das Akronym für den Grundkörper angegeben. Im Einzelfall folgt getrennt von Akronym für den Grundkörper mit einem Strich ein Code für die Substituenten R¹*, R²*, L¹* und L²*:

| Code für R¹*, R²*, L¹*, L^{2*}, L³* | R¹* | R²* | L¹* | L²* |
|---|---|---|---|---|
| nm | CₙH₂ₙ₊₁ | CₘH₂ₘ₊₁ | H | H |
| nOm | CₙH₂ₙ₊₁ | OCₘH₂ₘ₊₁ | H | H |
| nO.m | OCₙH₂ₙ₊₁ | CₘH₂ₘ₊₁ | H | H |
| n | CₙH₂ₙ₊₁ | CN | H | H |
| nN.F | CₙH₂ₙ₊₁ CₙH₂ₙ₊₁ | CN | F | H |
| nN.F.F | CₙH₂ₙ₊₁ | CN | F | F |
| nF | CₙH₂ₙ₊₁ | F | H | H |
| nCl | CₙH₂ₙ₊₁ | Cl | H | H |
| nOF | OCₙH₂ₙ₊ₜ | F | H | H |
| nF.F | CₙH₂ₙ₊₁ | F | F | H |
| nF.F.F | CₙH₂ₙ₊₁ | F | F | F |
| nOCF₃ | CₙH₂ₙ₊₁ | OCF₃ | H | H |
| nOCF₃.F | CₙH₂ₙ₊₁ | OCF₃ | F | H |
| n-Vm | CₙH₂ₙ₊₁ | -CH=CH-CₘH₂ₘ₊₁ | H | H |
| nV-Vm | CₙH₂ₙ₊₁-CH=CH- | -CH=CH-CₘH₂ₘ₊₁ | H | H |

Bevorzugte mesogene oder flüssigkristalline Substanzen, die für die Herstellung von Flüssigkristallmischungen geeignet sind und bei dem erfindungsgemäßen Verfahren Anwendung finden können, sind insbesondere in den Tabellen A und B gelistet:

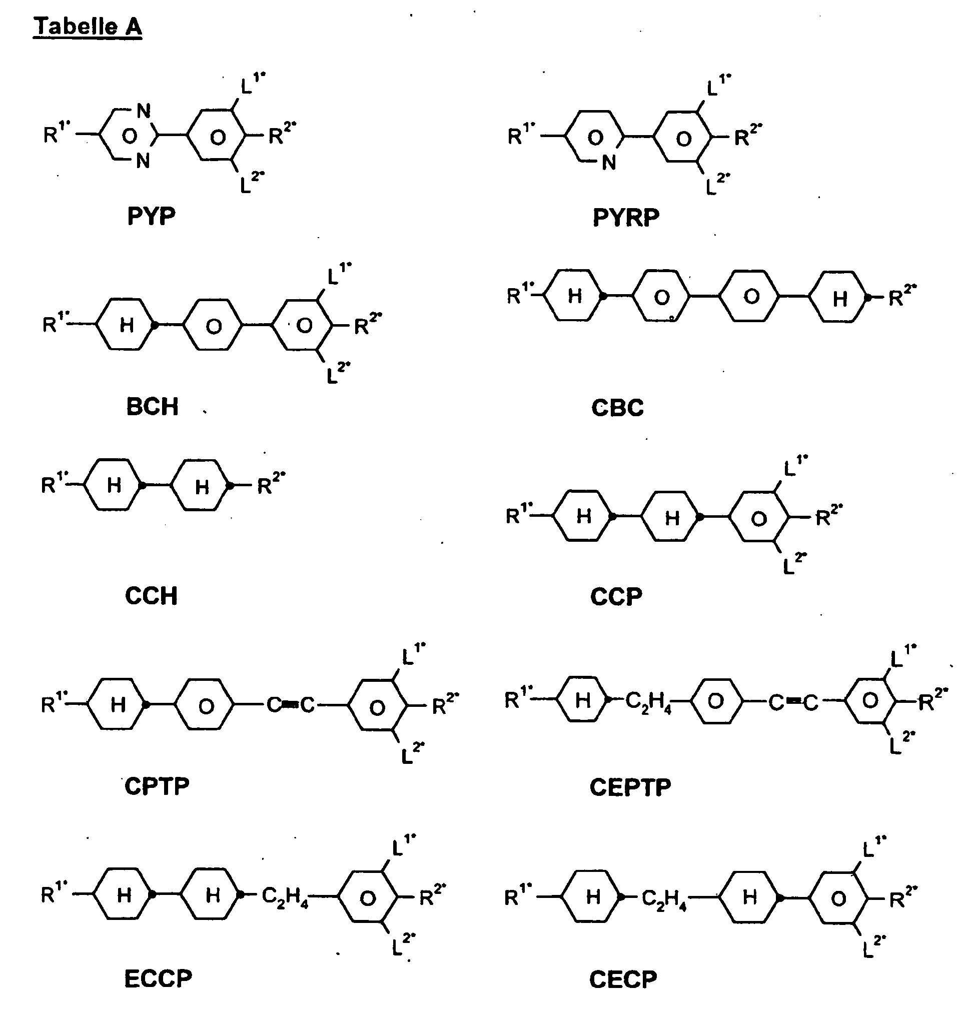

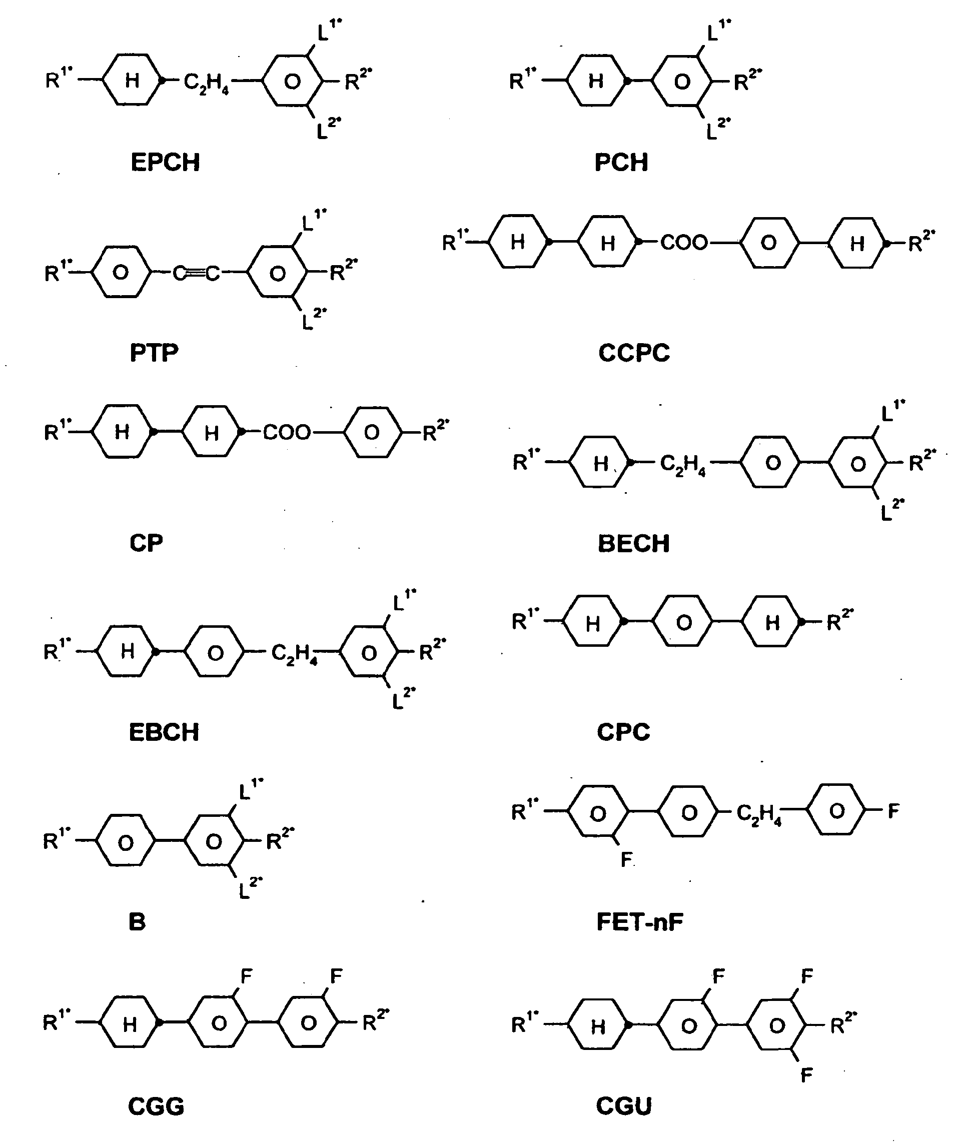

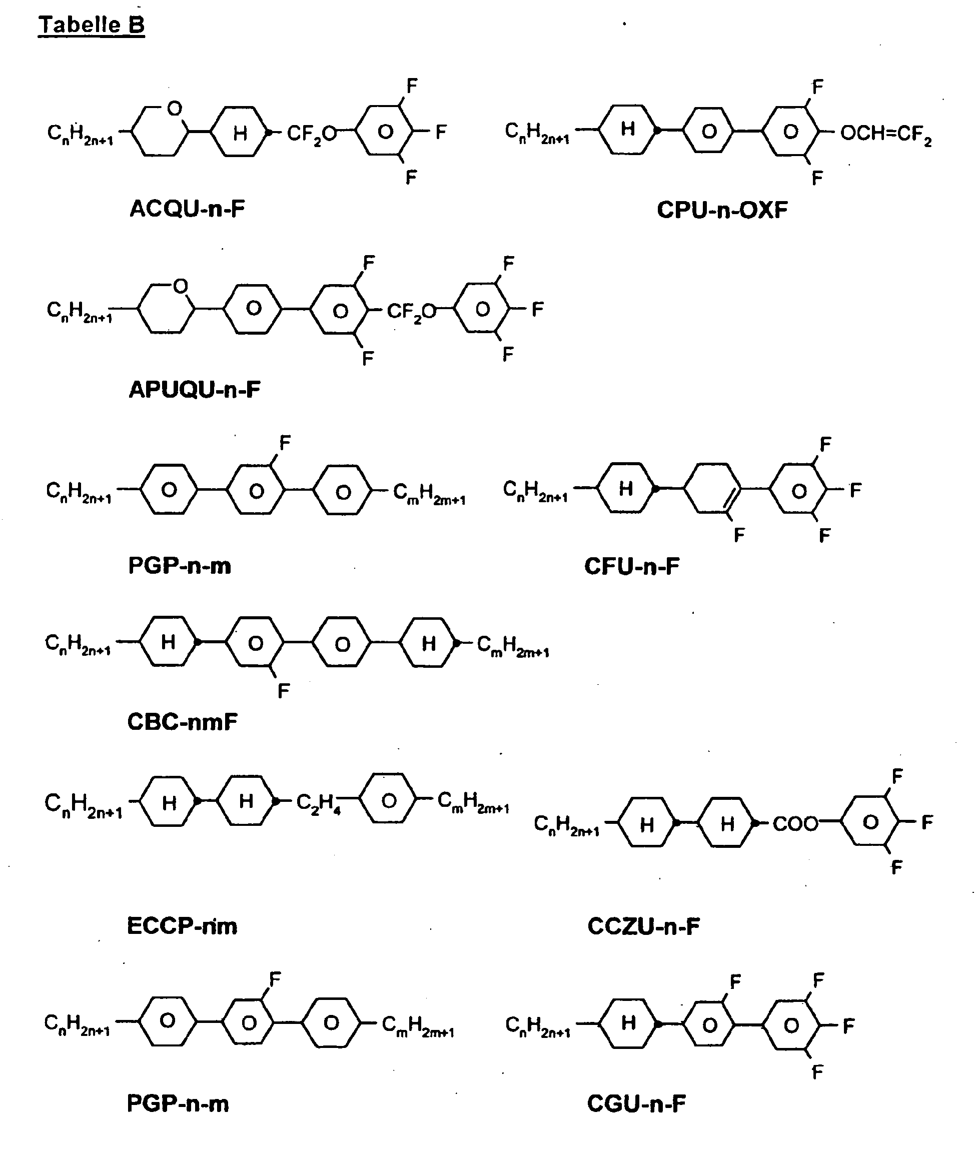

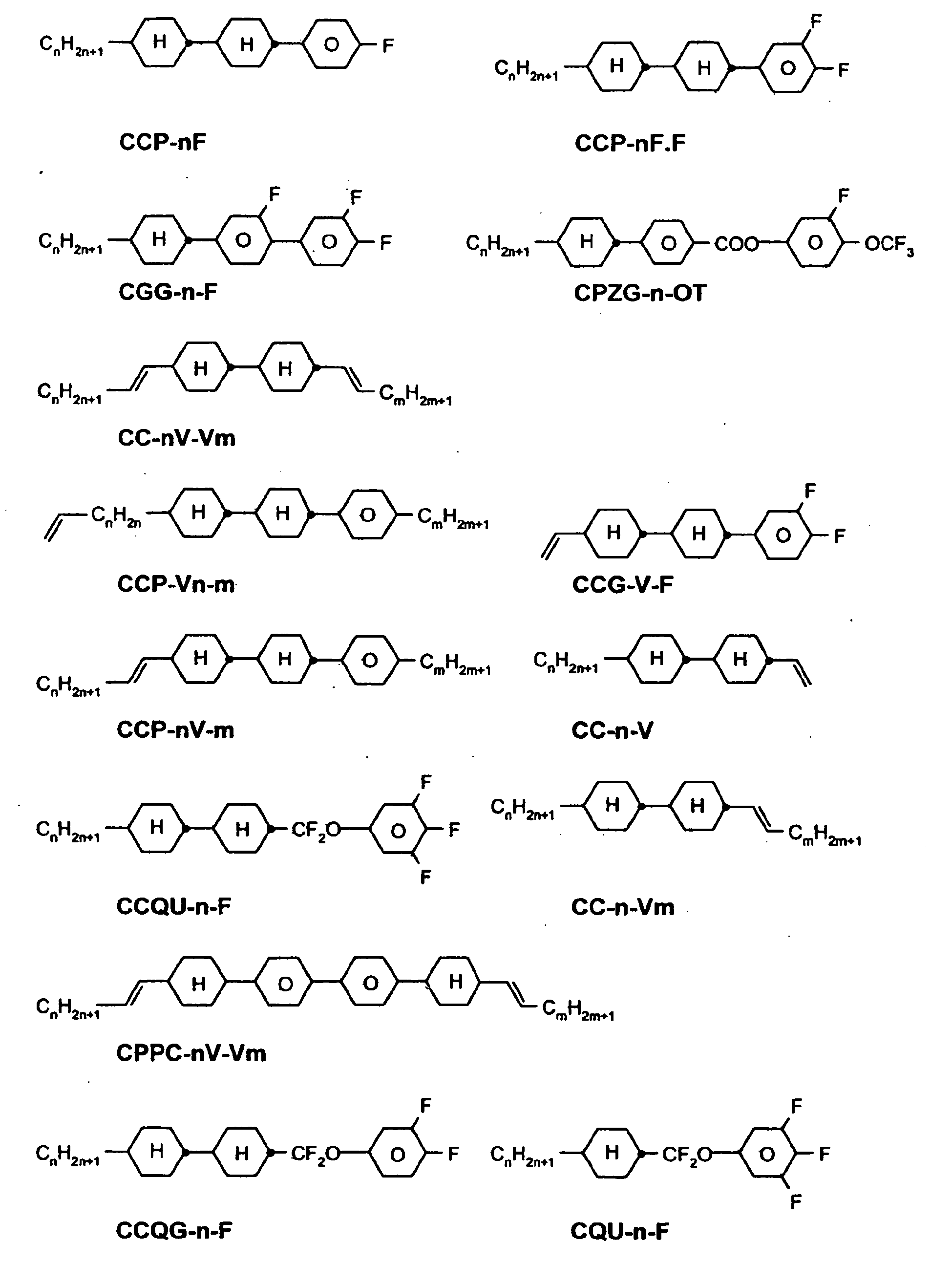

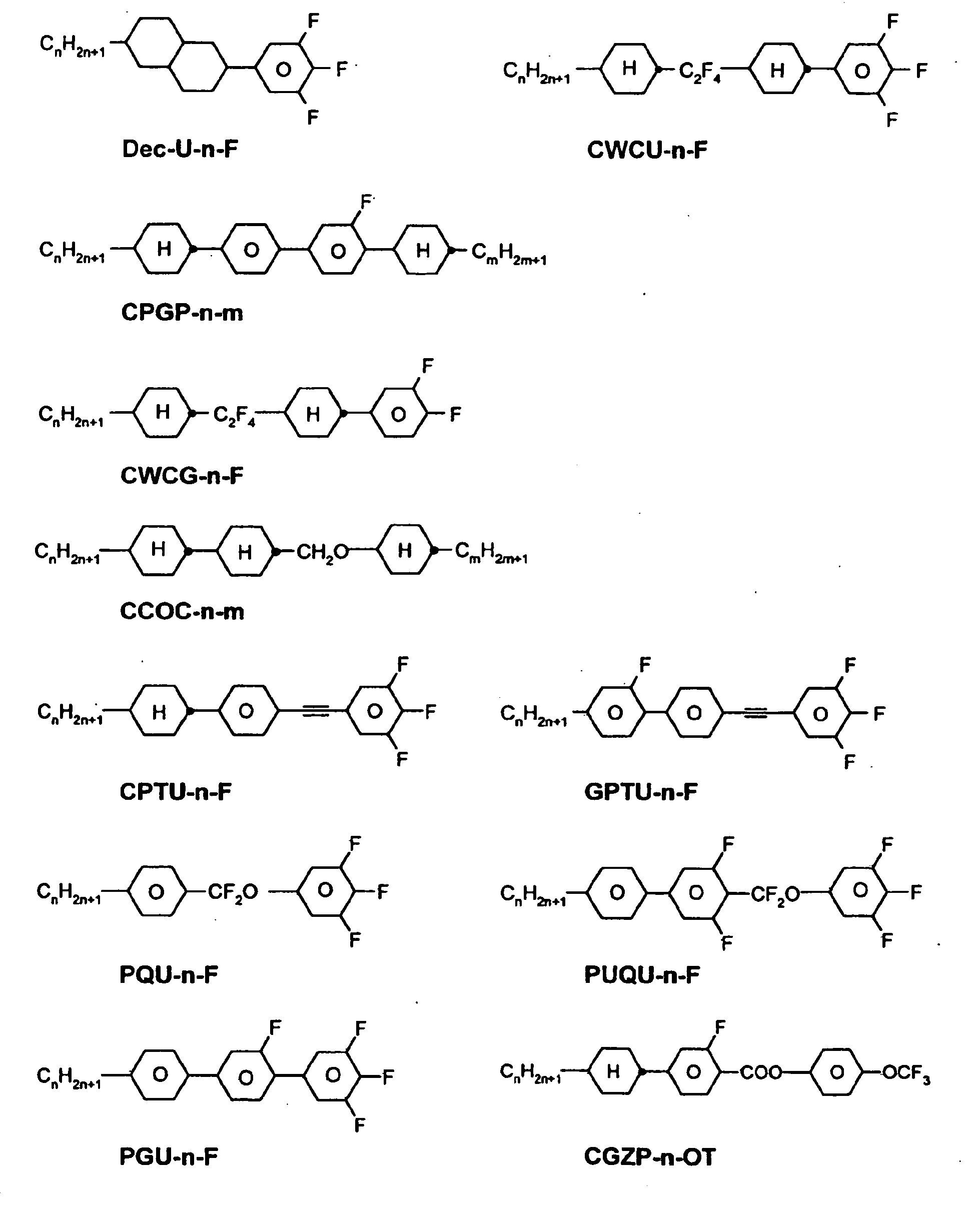

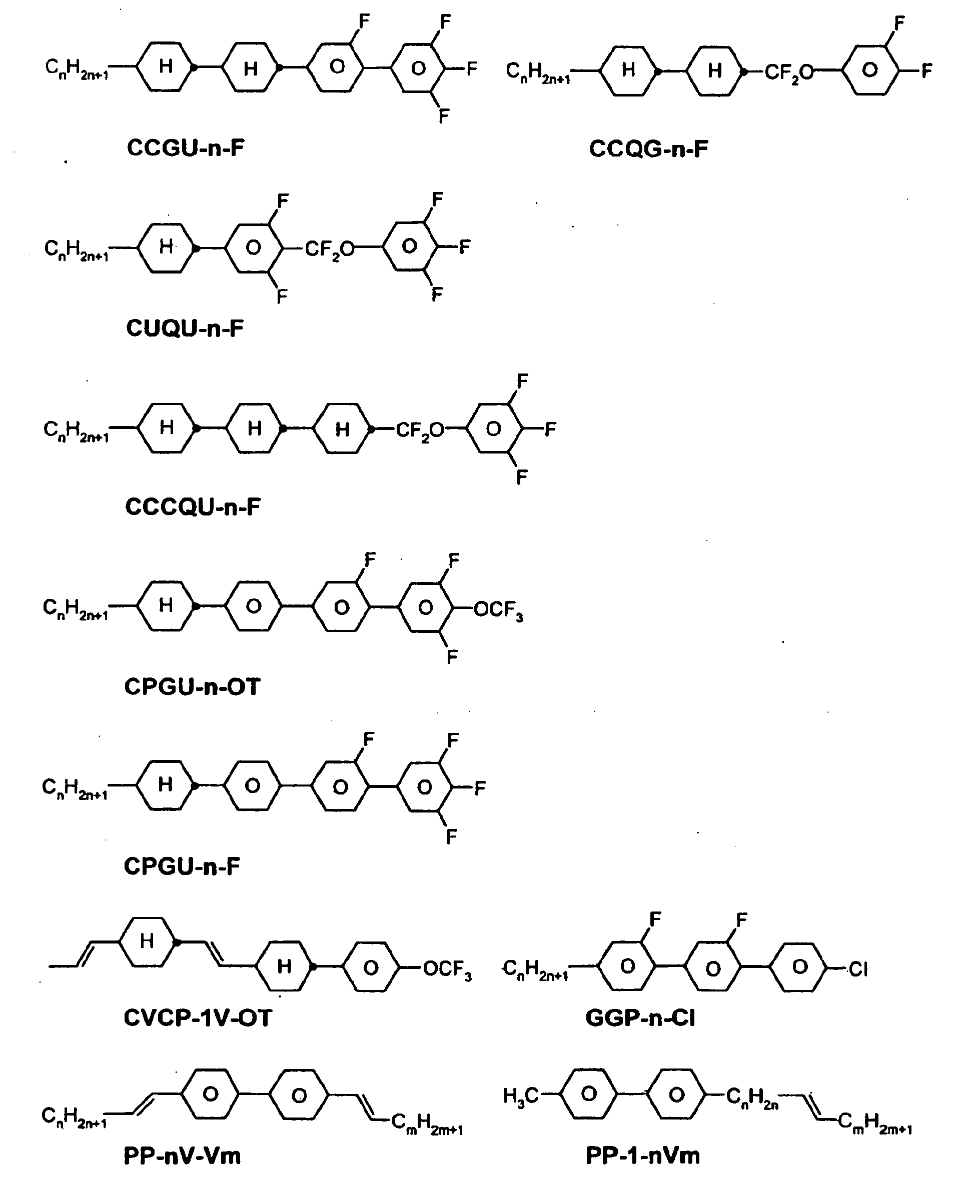

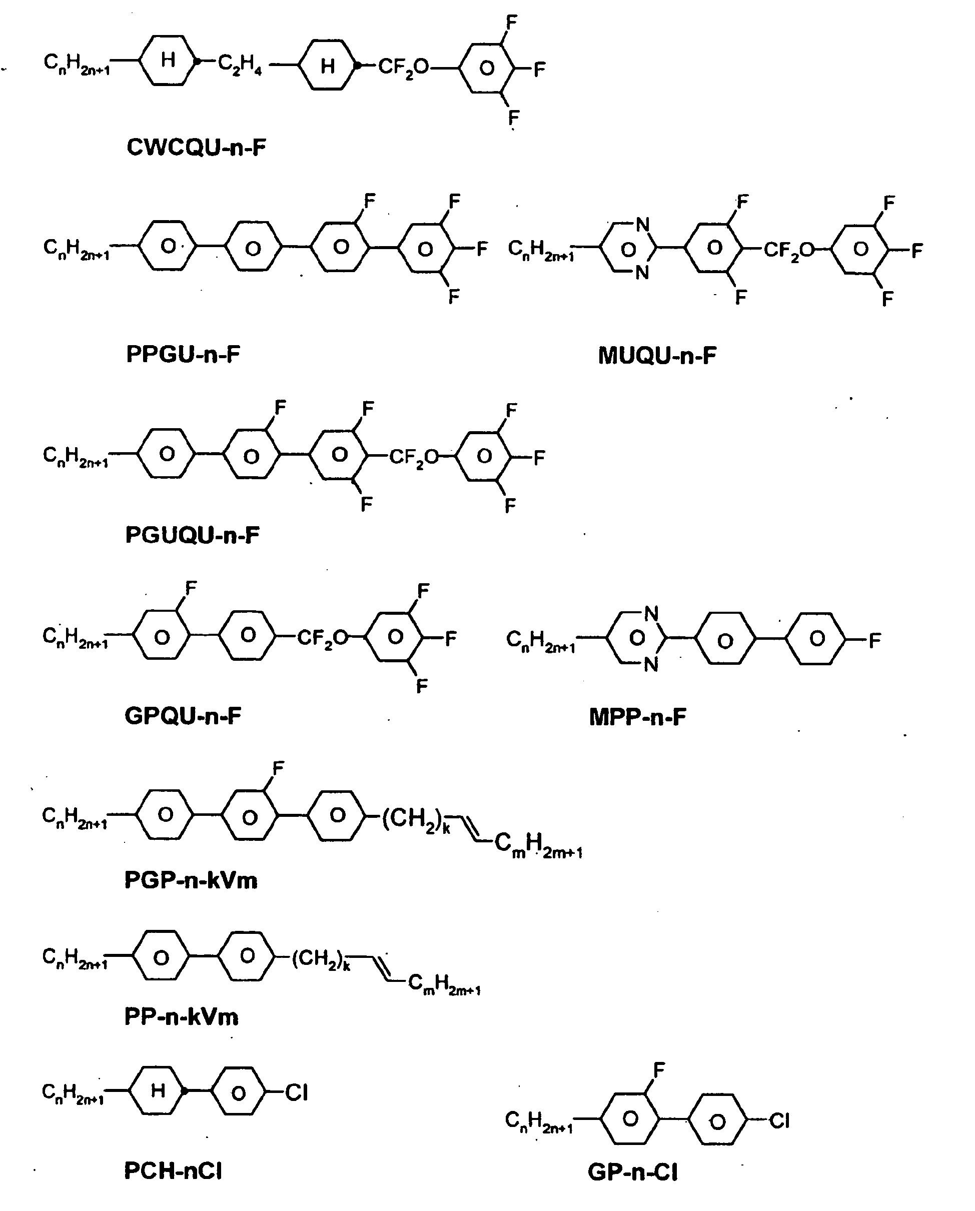

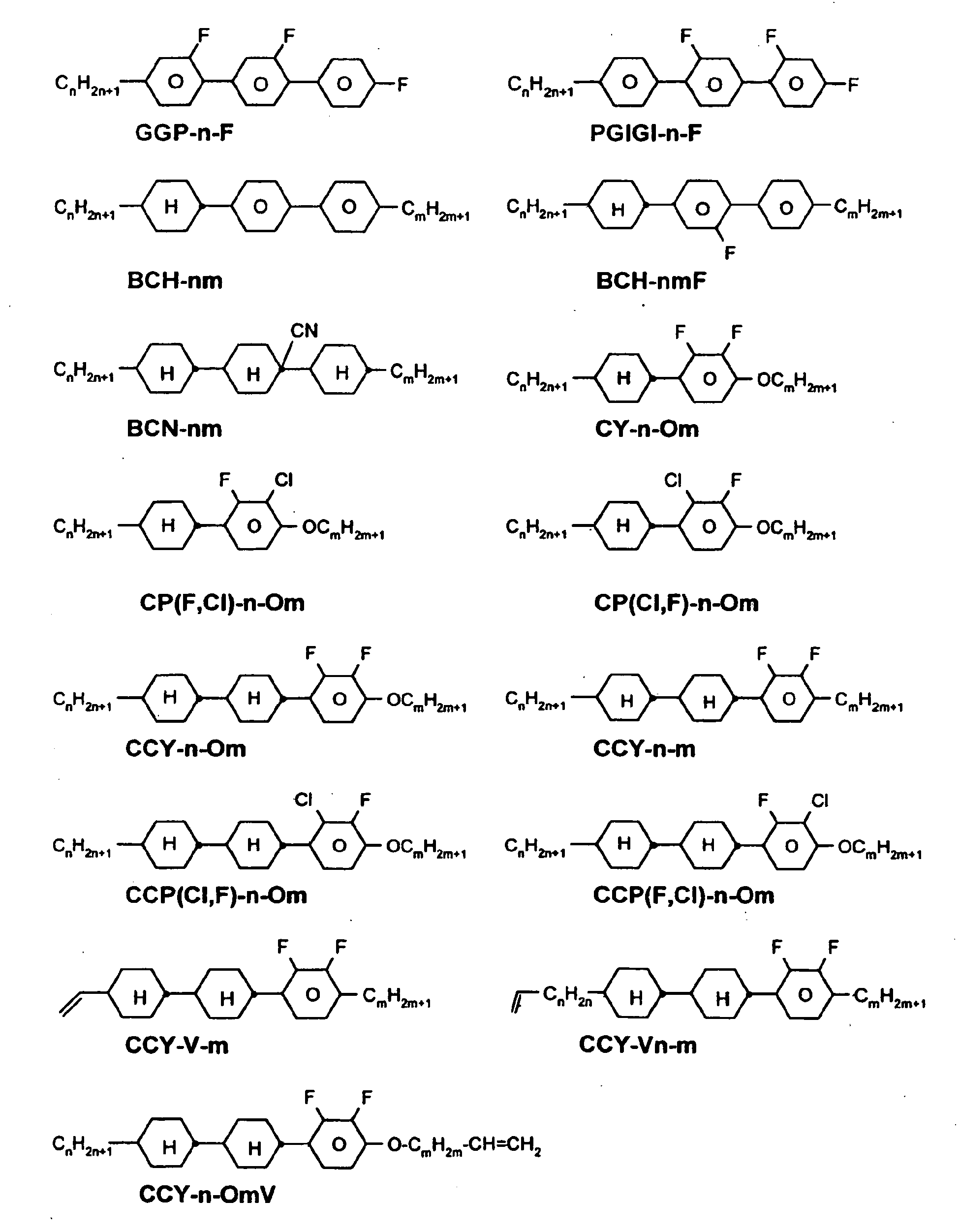

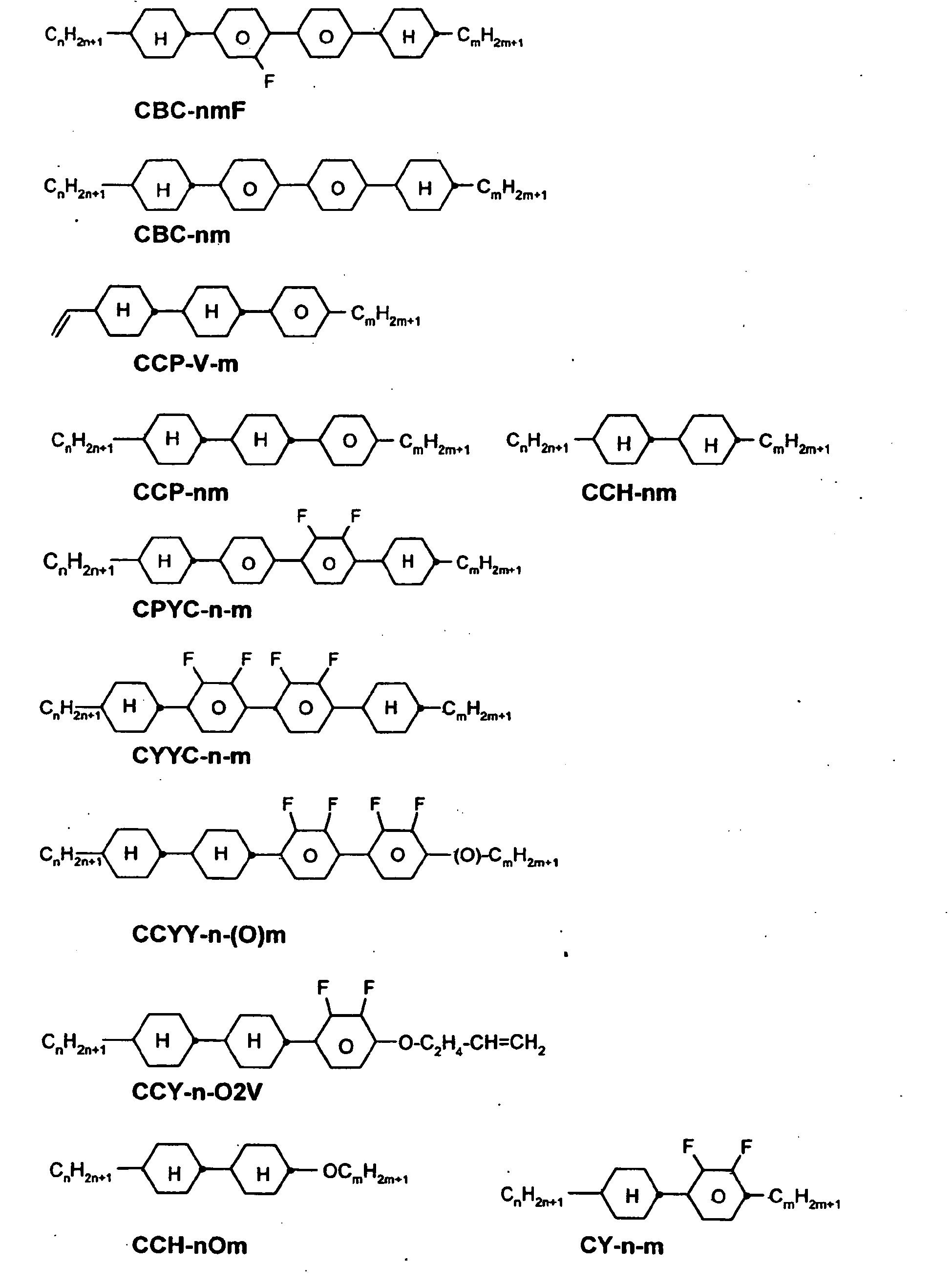

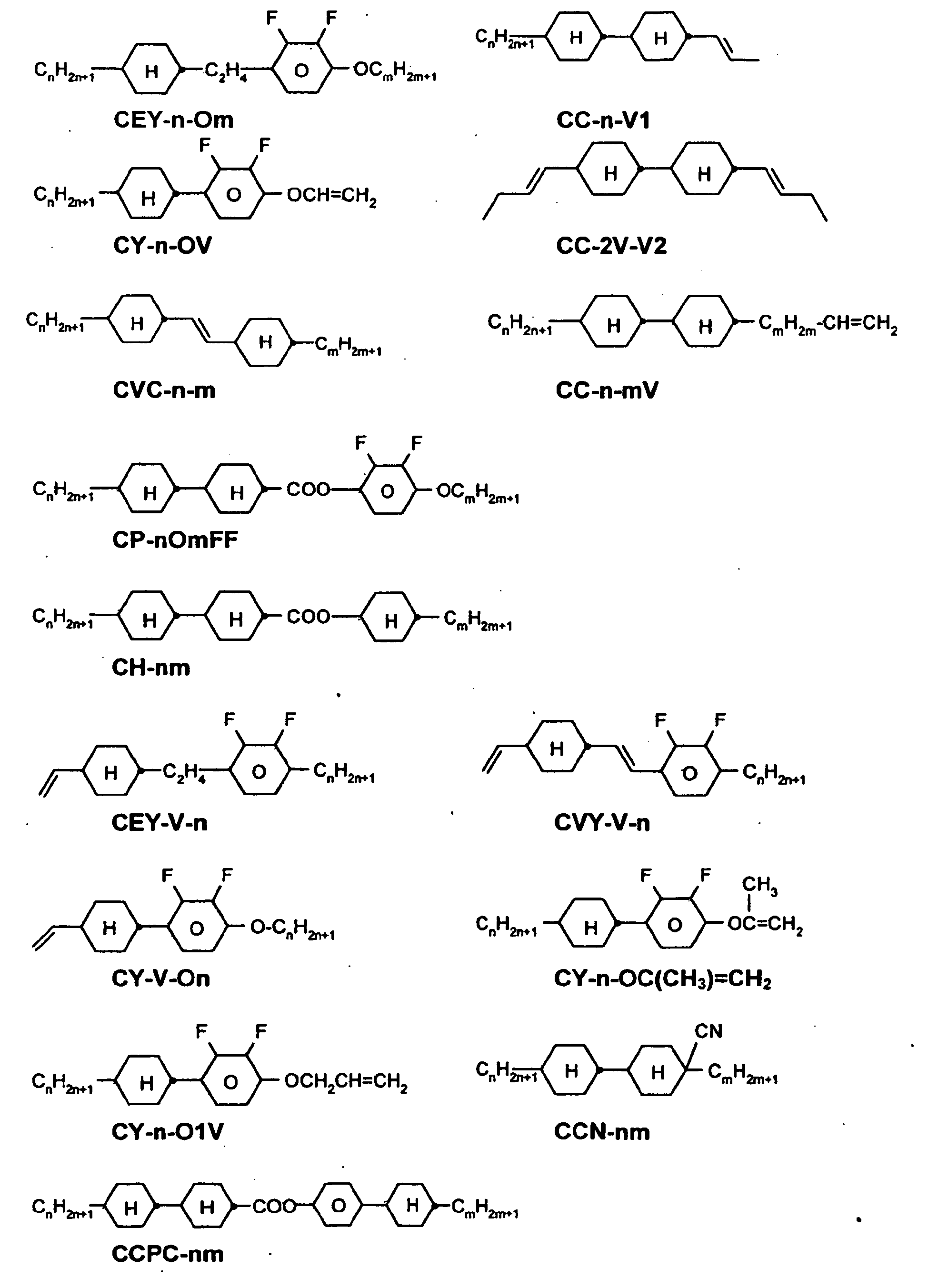

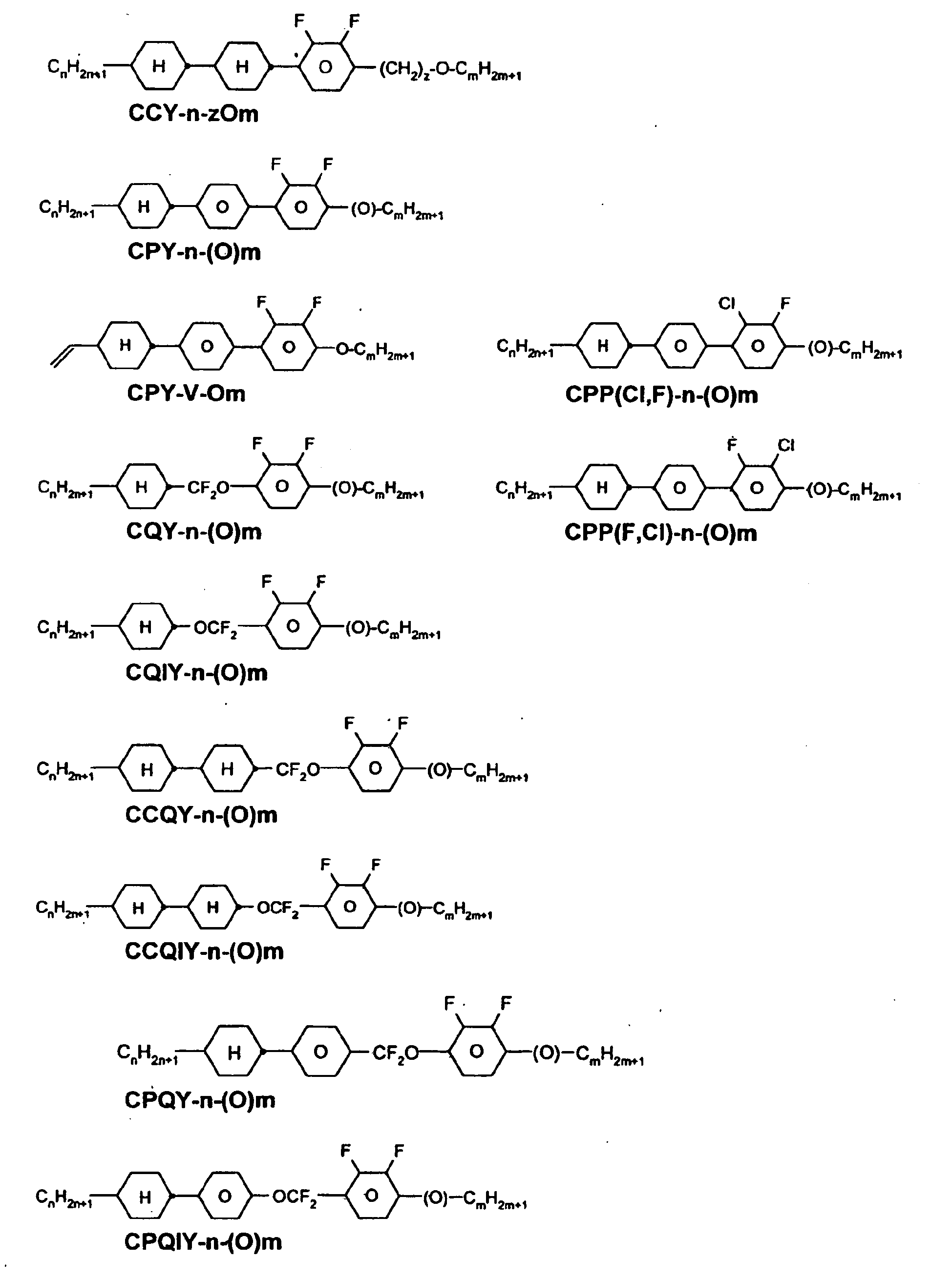

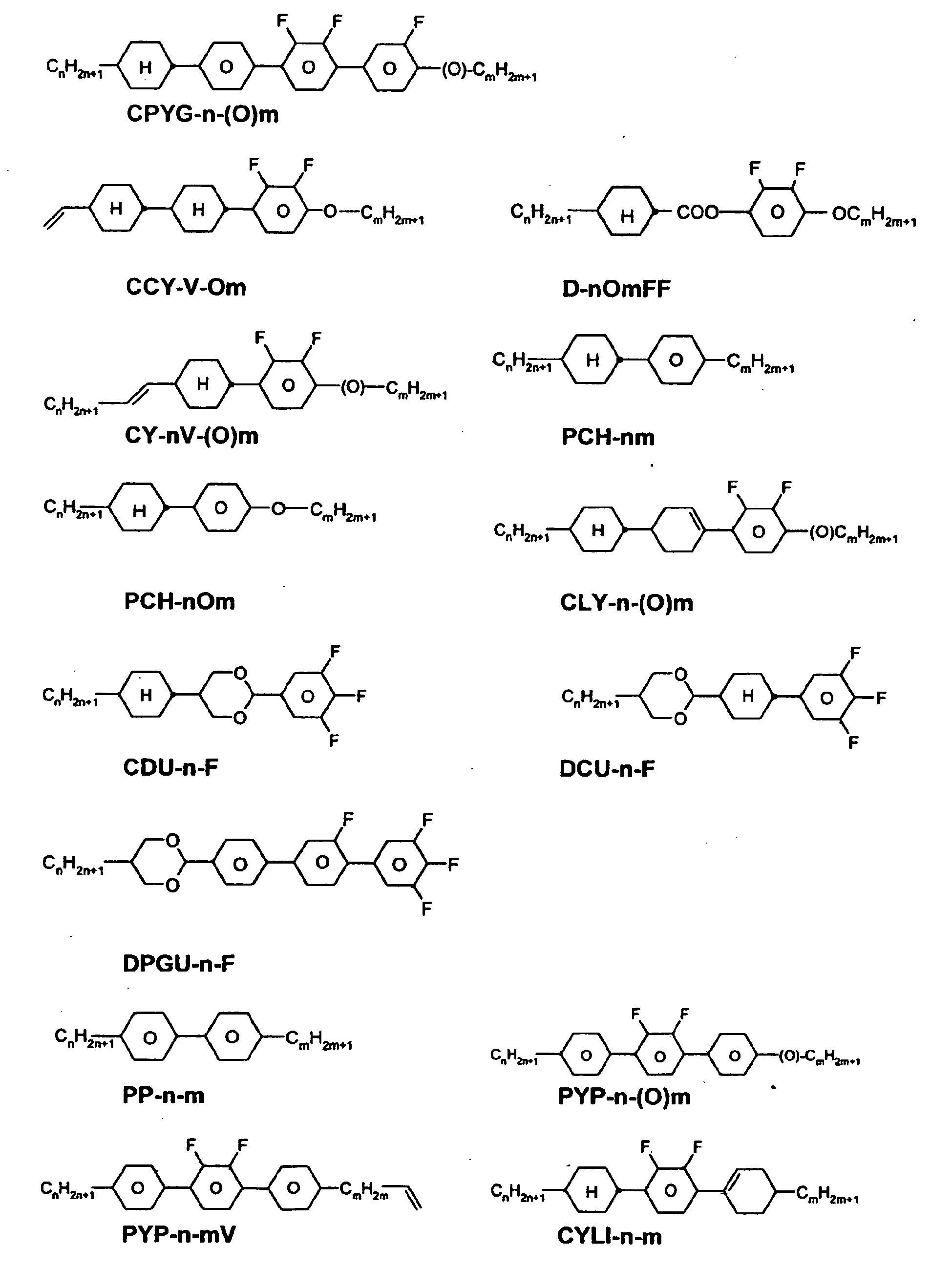

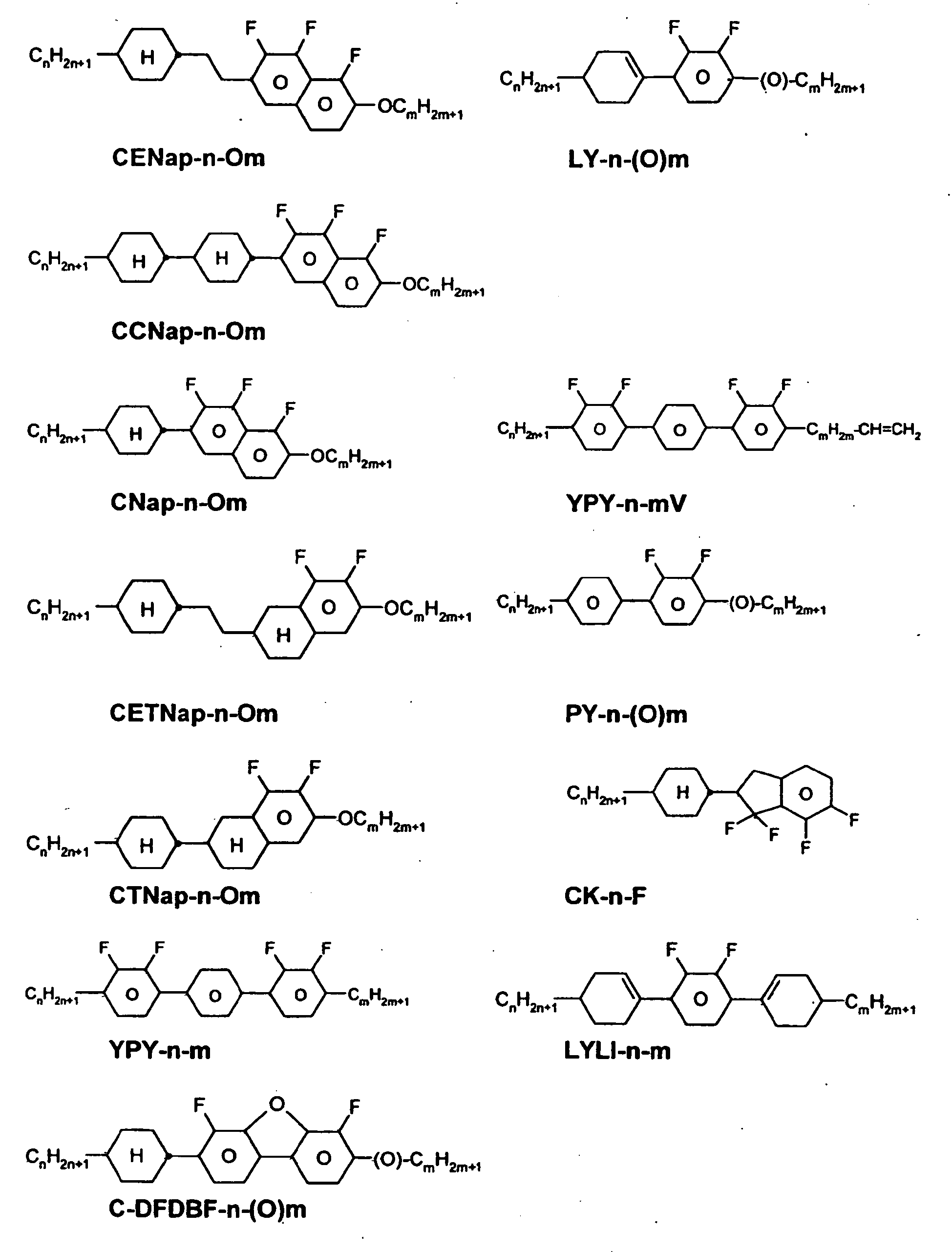

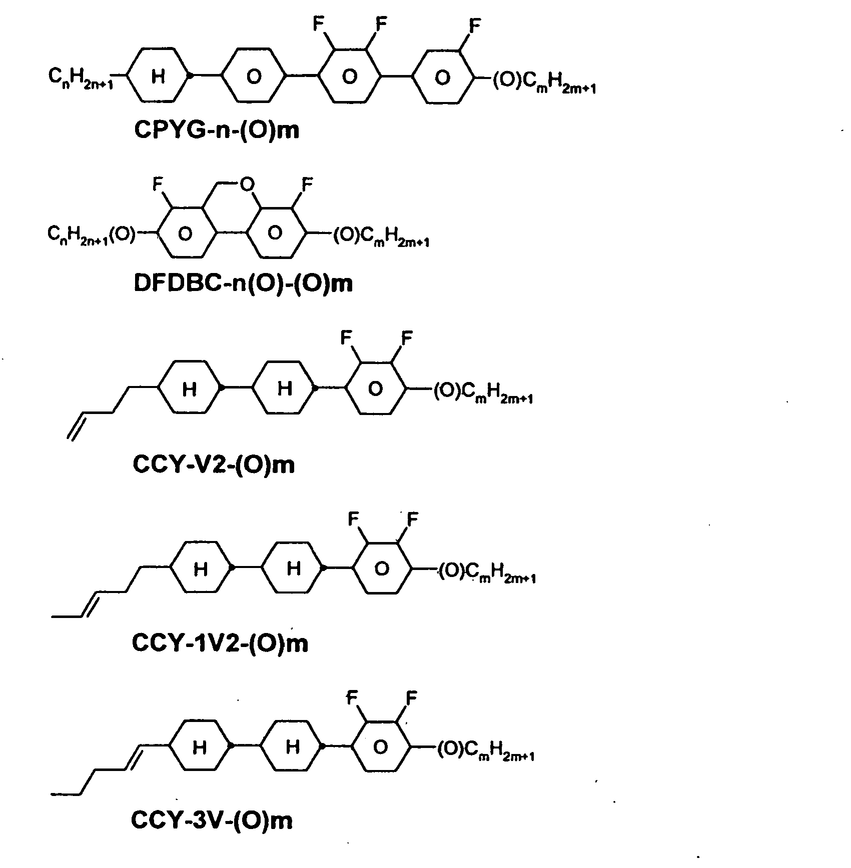

**Tabelle C**

| In der Tabelle C werden mögliche Dotierstoffe angegeben, die in der Regel mit den mesogenen Einzelsubstanzen vermischt werden. Vorzugsweise enthalten die Mischungen 0-10 Gew.%, insbesondere 0,01-5 Gew.% und besonders bevorzugt 0,01-3 Gew.%, eines oder mehrerer Dotierstoffe. | |
|---|---|
| 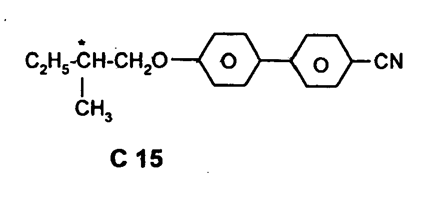 | 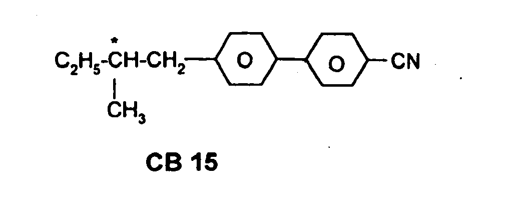 |
| 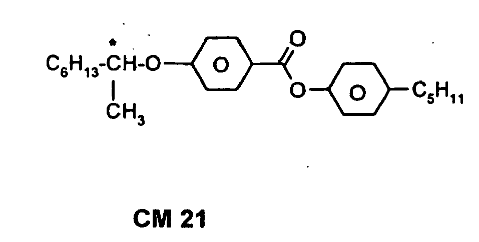 | 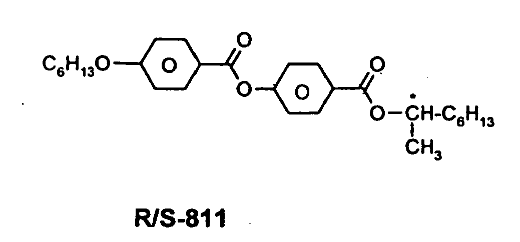 |
| 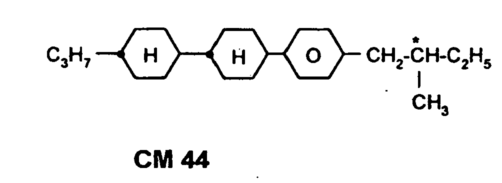 | 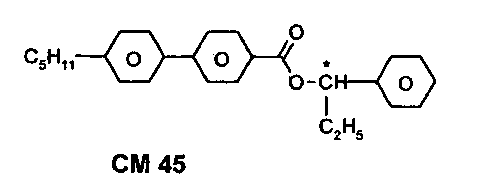 |
| 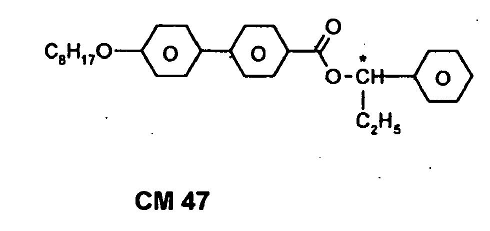 | 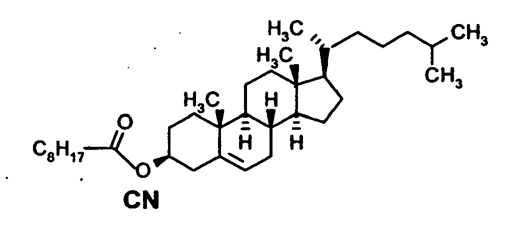 |
| 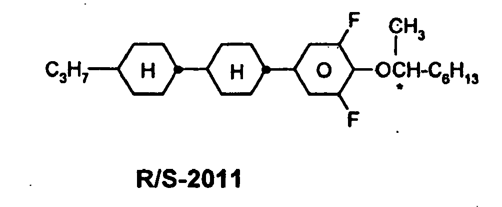 | 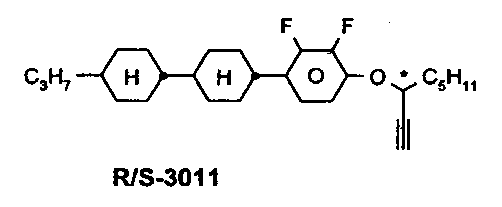 |
| 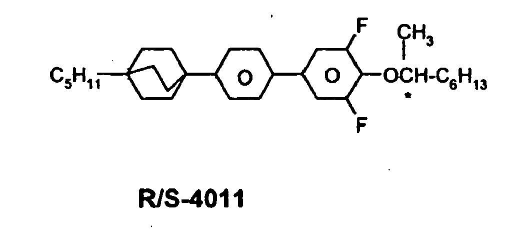 | 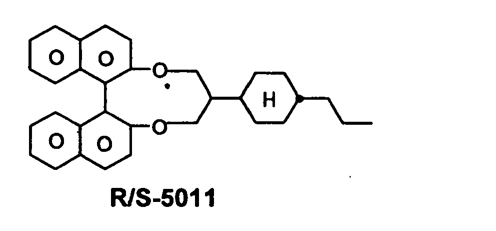 |
| 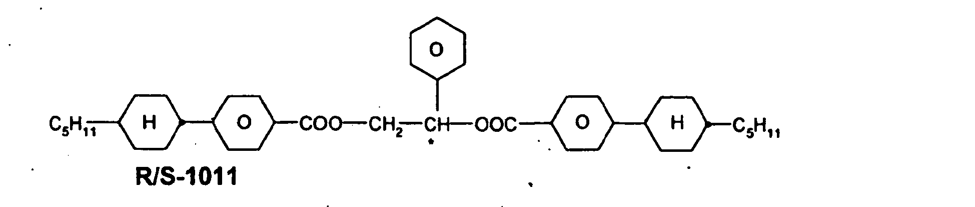 | |

**Tabelle D**

| Mögliche Stabilisatoren, die beispielsweise bei dem erfindungsgemäßen Verfahren mit den mesogenen Einzelsubstanzen in Mengen von 0-10 Gew.% vermischt werden, werden nachfolgend genannt. | |
|---|---|
| 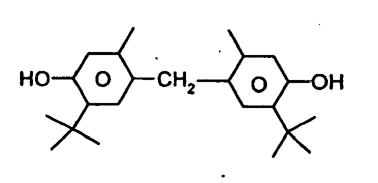 | 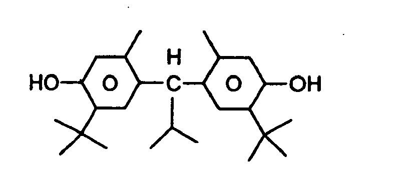 |
| 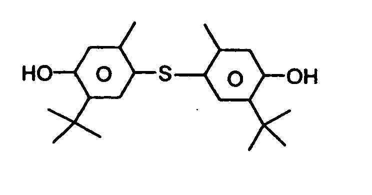 | 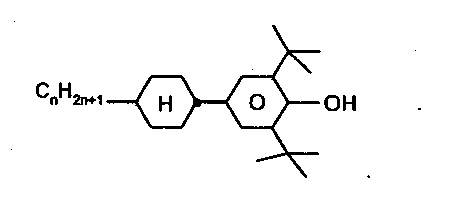 |
| 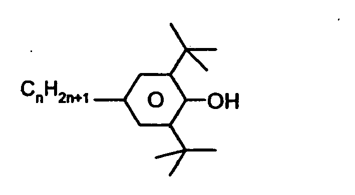 | 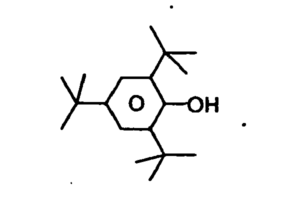 |
| n = 1, 2, 3, 4, 5, 6, oder 7 | |
| 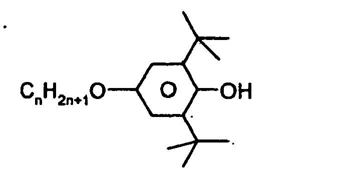 | 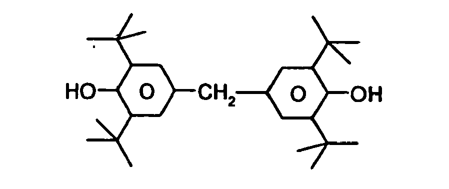 |
| 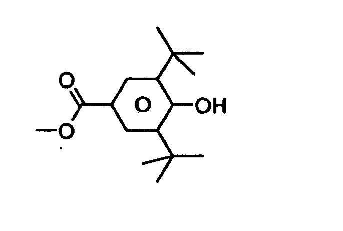 | 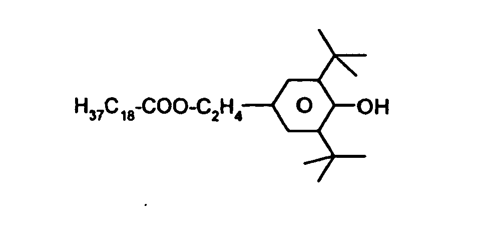 |
| 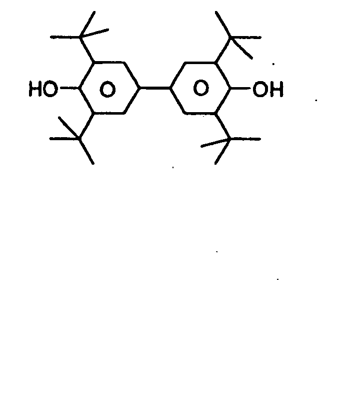 | 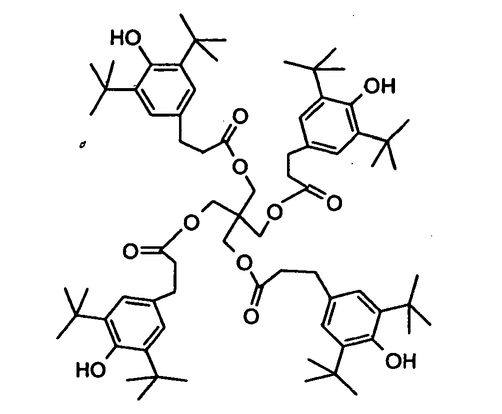 |
| 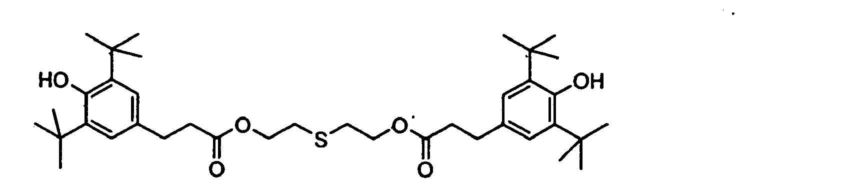 | |
| 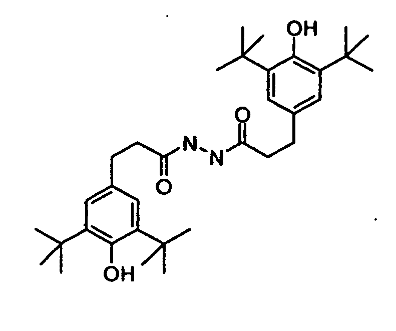 | 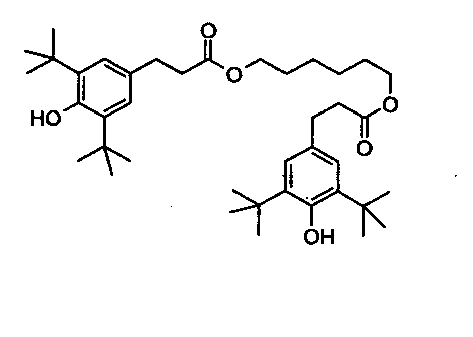 |
| 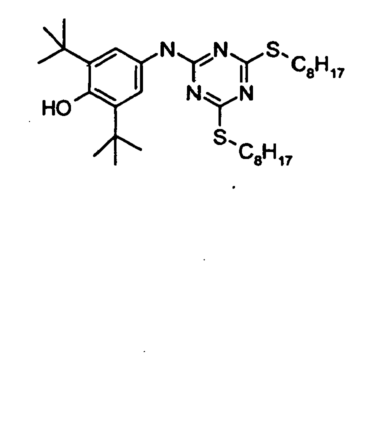 | 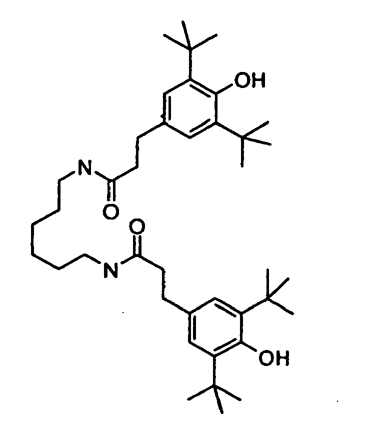 |
| 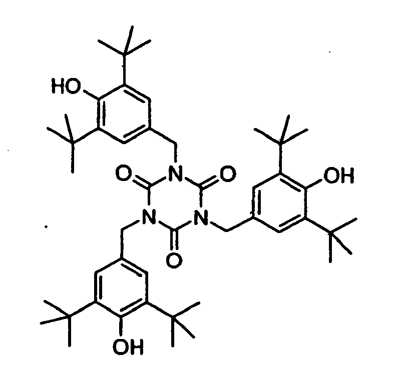 | 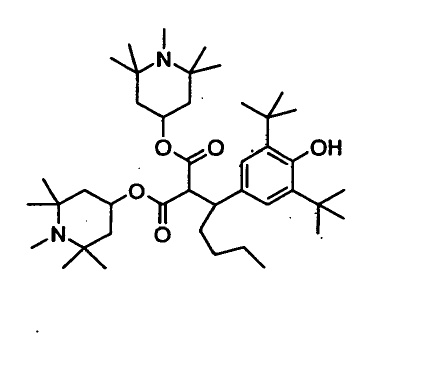 |
| 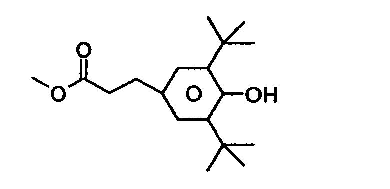 | 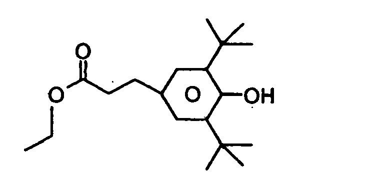 |
| 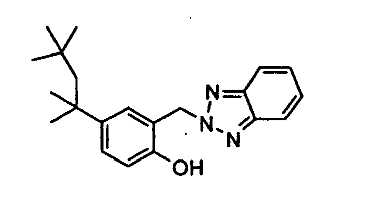 | 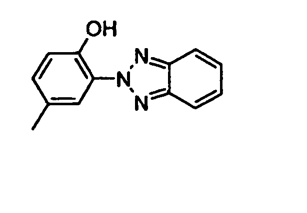 |
| 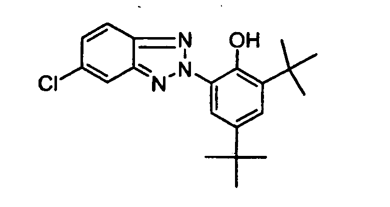 | 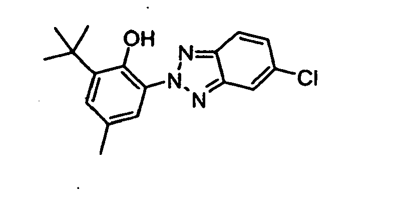 |
| 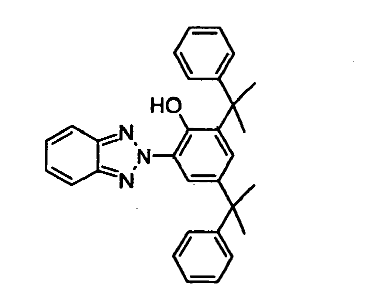 | 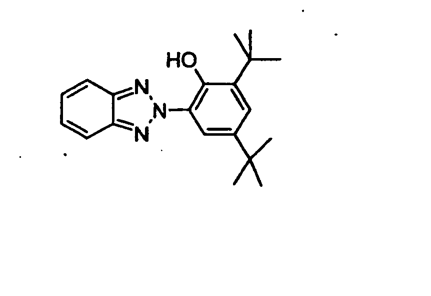 |
| 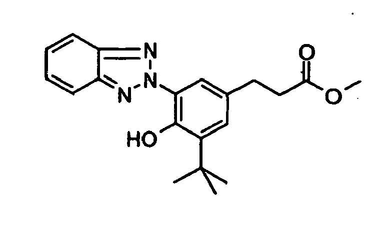 | 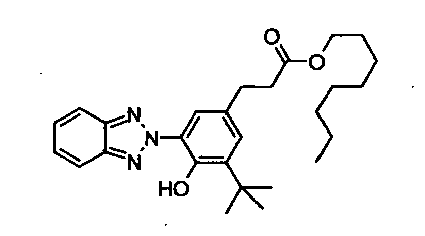 |
| 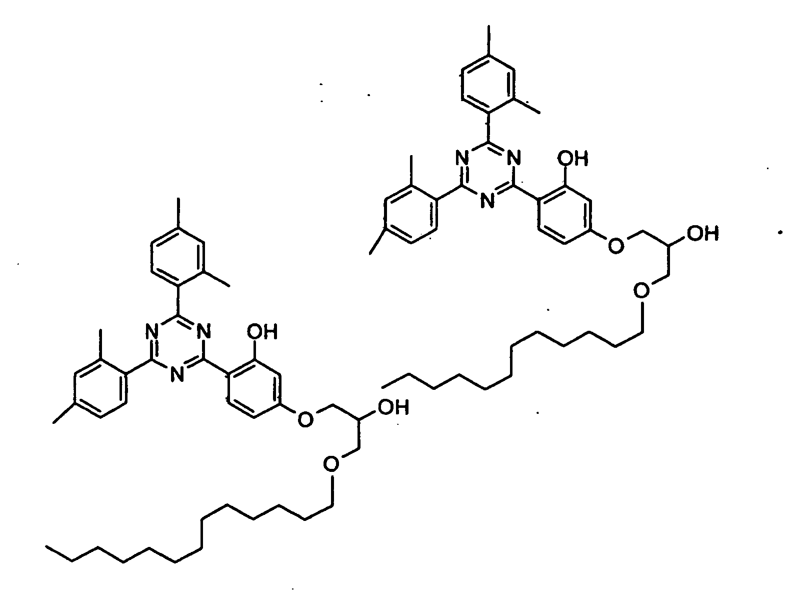 | |
| 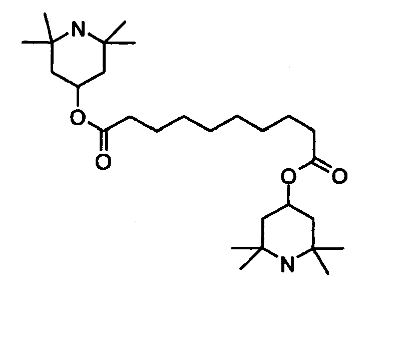 | 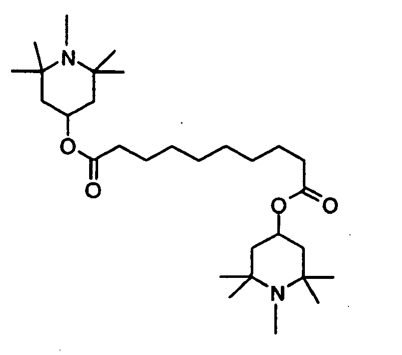 |

Bei der Herstellung von Flüssigkristallmischungen aus den mesogenen Einzelsubstanzen ausgewählt vorzugsweise aus den Verbindungen der Formel I können auch polymerisierbare Verbindungen, sogenannte reaktive Mesogene (RMs), beispielsweise wie in U.S. 6,861,107 offenbart, in Konzentrationen von bevorzugt 0,12 - 5 Gew.%, besonders bevorzugt 0,2 - 2 %, bezogen auf die Mischung eingesetzt werden. Derartige Mischungen können für sogenannte Polymer Stabilized VA-Modes, bei denen eine Polymerisierung der reaktiven Mesogene in der flüssigkristallinen Mischung erfolgen soll, verwendet werden. Voraussetzung hierfür ist, dass die Flüssigkristallmischung selbst keine polymerisierbaren Einzelsubstanzen, enthält.

Die polymerisierbaren mesogenen oder flüssigkristallinen Verbindungen, auch als "reaktive Mesogene" (RM) bezeichnet, sind vorzugsweise ausgewählt aus den Verbindungen der Formel II,

R^{a}-A¹-(Z¹-A²)ₘ-R^{b} II

worin die einzelnen Reste folgende Bedeutung haben:
- A¹ und A²: jeweils unabhängig voneinander eine aromatische, heteroaromatische, alicyclische oder heterocyclische Gruppe, vorzugsweise mit 4 bis 25 C-Atomen, welche auch annellierte Ringe enthalten kann, und welche optional durch L ein- oder mehrfach substituiert ist,
- Z¹: bei jedem Auftreten gleich oder verschieden -O-, -S-, -CO-, -CO-O-, -OCO-, -O-CO-O-, -OCH₂-, -CH₂O-, -SCH₂-, -CH₂S-, -CF₂O-, -OCF₂-, -CF₂S-, -SCF₂-, -(CH₂)ₙ-, -CF₂CH₂-, -CH₂CF₂-, -(CF₂)ₙ-, -CH=CH-, -CF=CF-, -C≡C-, -CH=CH- COO-, -OCO-CH=CH-, CR⁰R⁰⁰ oder eine Einfachbindung,
- L, R^{a} und R^{b}: jeweils unabhängig voneinander H, Halogen, SF₅, NO₂, eine Kohlenstoffgruppe oder Kohlenwasserstoffgruppe, wobei die Verbindungen mindestens einen Rest L, R^{a} und R^{b} enthalten, der eine Gruppe P-Sp- bedeutet oder enthält,
- R⁰ und R⁰⁰: jeweils unabhängig voneinander H oder Alkyl mit 1 bis 12 C- Atomen,
- P: eine polymerisierbare Gruppe,
- Sp: eine Abstandsgruppe oder eine Einfachbindung,
- m: 0, 1, 2, 3 oder 4,
- n: 1, 2, 3 oder 4.

Die polymerisierbaren Verbindungen können eine polymerisierbare Gruppe (monoreaktiv) oder zwei oder mehr (di- oder multireaktiv), vorzugsweise zwei polymerisierbare Gruppen aufweisen.

Vor- und nachstehend gelten folgende Bedeutungen:

Der Begriff "mesogene Gruppe" ist dem Fachmann bekannt und in der Literatur beschrieben, und bedeutet eine Gruppe, die durch die Anisotropie ihrer anziehenden und abstoßenden Wechselwirkungen wesentlich dazu beiträgt, in niedermolekularen oder polymeren Substanzen eine Flüssigkristall(FK-)Phase hervorzurufen. Verbindungen enthaltend mesogene Gruppen (mesogene Verbindungen) müssen nicht unbedingt selbst eine FK-Phase aufweisen. Es ist auch möglich, dass mesogene Verbindungen FK-Phasenverhalten nur nach Vermischung mit anderen Verbindungen und/oder nach Polymerisation zeigen. Typische mesogene Gruppen sind beispielsweise starre stäbchen- oder scheibchenförmige Einheiten. Ein Überblick über die im Zusammenhang mit mesogenen bzw. FK-Verbindungen verwendeten Begriffe und Definitionen findet sich in Pure Appl. Chem. 73(5), 888 (2001) und C. Tschierske, G. Pelzl, S. Diele, Angew. Chem. 2004, 116, 6340-6368.

Der Begriff "Abstandsgruppe" (engl. "spacer" oder "spacer group"), vor- und nachstehend auch als "Sp" bezeichnet, ist dem Fachmann bekannt und in der Literatur beschrieben, siehe beispielsweise Pure Appl. Chem. 73(5), 888 (2001) und C. Tschierske, G. Pelzl, S. Diele, Angew. Chem. 2004, 116, 6340-6368. Falls nicht anders angegeben, bezeichnet der Begriff "Abstandsgruppe" bzw. "Spacer" vor- und nachstehend eine flexible Gruppe, die in einer polymerisierbaren mesogenen Verbindung ("RM") die mesogene Gruppe und die polymerisierbare(n) Gruppe(n) miteinander verbindet. Bevorzugt bedeutet Sp eine Einfachbindung oder ein 1-16 C Alkylen, worin ein oder mehrere CH₂-Gruppen durch -O-, -CO-, -COO- oder -OCO- so ersetzt sein können, so dass nicht zwei O-Atome direkt miteinander verbunden sind.

Der Begriff "organische Gruppe" bedeutet eine Kohlenstoff oder Kohlenwasserstoffgruppe.

Der Begriff "Kohlenstoffgruppe" bedeutet eine ein- oder mehrbindige organische Gruppe enthaltend mindestens ein Kohlenstoffatom, wobei diese entweder keine weiteren Atome enthält (wie z.B. -C≡C-), oder gegebenenfalls ein oder mehrere weitere Atome wie beispielsweise N, O, S, P, Si, Se, As, Te oder Ge enthält (z.B. Carbonyl etc.). Der Begriff "Kohlenwasserstoffgruppe" bedeutet eine Kohlenstoffgruppe, die zusätzlich ein oder mehrere H-Atome und gegebenenfalls ein oder mehrere Heteroatome wie beispielsweise N, O, S, P, Si, Se, As, Te oder Ge enthält.

### "Halogen" bedeutet F, Cl, Br oder I.

Die Begriffe "Alkyl", "Aryl", "Heteroaryl" etc. umfassen auch mehrbindige Gruppen, beispielsweise Alkylen, Arylen, Heteroarylen etc.

Der Ausdruck "Alkyl" umfasst in dieser Anmeldung geradkettige und verzweigte Alkylgruppen mit 1-7 Kohlenstoffatomen, insbesondere die geradkettigen Gruppen Methyl, Ethyl, Propyl, Butyl, Pentyl, Hexyl und Heptyl. Gruppen mit 1-6 Kohlenstoffatomen sind im allgemeinen bevorzugt.

Der Ausdruck "Alkenyl" umfasst in dieser Anmeldung geradkettige und verzweigte Alkenylgruppen mit 2-7 Kohlenstoffatomen, insbesondere die geradkettigen Gruppen. Bevorzugte Alkenylgruppen sind C₂-C₇-1E-Alkenyl, C₄-C₇-3E-Alkenyl, C₅-C₇-4-Alkenyl, C₆-C₇-5-Alkenyl und C₇-6-Alkenyl, insbesondere C₂-C₇-1E-Alkenyl, C4-C₇-3E-Alkenyl und C₅-C₇-4-Alkenyl. Beispiele besonders bevorzugter Alkenylgruppen sind Vinyl, 1 E-Propenyl, 1 E-Butenyl, 1 E-Pentenyl, 1 E-Hexenyl, 1 E-Heptenyl, 3-Butenyl, 3E-Pentenyl, 3E-Hexenyl, 3E-Heptenyl, 4-Pentenyl, 4Z-Hexenyl, 4E-Hexenyl, 4Z-Heptenyl, 5-Hexenyl, 6-Heptenyl und dergleichen. Gruppen mit bis zu 5 Kohlenstoffatomen sind im allgemeinen bevorzugt.

Der Ausdruck "Fluoralkyl" umfasst in dieser Anmeldung geradkettige Gruppen mit mindestens einem Fluoratom, vorzugsweise einem endständigem Fluor, d.h. Fluormethyl, 2-Fluorethyl, 3-Fluorpropyl, 4-Fluorbutyl, 5-Fluorpentyl, 6-Fluorhexyl und 7-Fluorheptyl. Andere Positionen des Fluors sind jedoch nicht ausgeschlossen.

Der Ausdruck "Oxaalkyl" bzw. "Alkoxy" umfasst in dieser Anmeldung geradkettige Reste der Formel CₙH₂ₙ₊₁-O-(CH₂)ₘ, worin n und m jeweils unabhängig voneinander 1 bis 6 bedeuten. m kann auch 0 bedeuten. Vorzugsweise ist n = 1 und m 1-6 oder m = 0 und n = 1-3.

Der Begriff "Aryl" bedeutet eine aromatische Kohlenstoffgruppe oder eine davon abgeleitete Gruppe. Der Begriff "Heteroaryl" bedeutet "Aryl" gemäß vorstehender Definition, enthaltend ein oder mehrere Heteroatome.

Die polymerisierbare Gruppe P ist eine Gruppe, die für eine Polymerisationsreaktion, wie beispielsweise die radikalische oder ionische Kettenpolymerisation, Polyaddition oder Polykondensation, oder für eine polymeranaloge Umsetzung, beispielsweise die Addition oder Kondensation an eine Polymerhauptkette, geeignet ist. Besonders bevorzugt sind Gruppen für die Kettenpolymerisation, insbesondere solche enthaltend eine C=C-Doppelbindung oder -C≡C-Dreifachbindung, sowie zur Polymerisation unter Ringöffnung geeignete Gruppen wie beispielsweise Oxetan- oder Epoxygruppen

Die Herstellung der polymerisierbaren Verbindungen erfolgt in Analogie zu dem Fachmann bekannten und in Standardwerken der organischen Chemie beschriebenen Verfahren, wie beispielsweise in Houben-Weyl, Methoden der organischen Chemie, Thieme-Verlag, Stuttgart.

Typische und bevorzugte reaktive Mesogene (RMs) sind beispielsweise in WO 93/22397, EP 0 261 712, DE 195 04 224, WO 95/22586, WO 97/00600, US 5,518,652, US 5,750,051, US 5,770,107 und US 6,514,578 beschrieben.

Die folgenden Beispiele sollen die Erfindung erläutern, ohne sie zu begrenzen.

Vor- und nachstehend bedeuten Prozentangaben Gewichtsprozent. Alle Temperaturen sind in Grad Celsius angegeben.

### Ausführungsbeispiele

### Beispiel 1

Bei der Herstellung einer VA-Mischung werden die nachfolgend genannten Einzelsubstanzen Nr. 1-10 in die Mischtrommel eines Schwingungsmischer, z. B. ein biaxialer Mischer der Fa. Collomix, gegeben und 60 Minuten bei Raumtemperatur homogenisiert. Man erhält 15 kg einer flüssigkristallinen Mischung, die aus einem Auslassventil am Boden der Mischtrommel direkt in Gebinde abgefüllt wird.

| Nr. | Substanz | Menge in 15 kg Mischung | Aggregatzustand bei 23 °C (RT) | Phase | Schmelzpunkt |
|---|---|---|---|---|---|
| 1 | CY-3-O2 | 2,40 kg | fest | kristallin | 60 °C |
| 2 | CY-5-O2 | 2,10 kg | fest | kristallin | 49 °C |
| 3 | CCY-3-O2 | 1,80 kg | fest | kristallin | 79 °C |
| 4 | CCY-5-O2 | 1,65 kg | fest | kristallin | 66 °C |
| 5 | CCY-2-1 | 1,35 kg | fest | kristallin | 58 °C |
| 6 | CCY-3-1 | 1,20 kg | fest | kristallin | 67 °C |
| 7 | CC-3-4 | 1,20 kg | flüssig | smektisch | -5 °C |
| 8 | CC-3-5 | 1,35 kg , | flüssig | smektisch | 22 °C |
| 9 | CP-5-3 | 1,05 kg | flüssig | isotrop | -8 °C |
| 10 | CP-3-O1 | 0,90 kg | fest | kristallin | 33 °C |

### Beispiel 2

Zu Herstellung einer PS-VA-Mischung (PS = polymer stabilized) werden die Einzelsubstanzen aus Beispiel 1 mit einem reaktiven Mesogen der Formel A in einem Schwingungsmischer, z.B. ein biaxialer Mischer der Fa. Collomix, gegeben und 90 Minuten bei Raumtemperatur homogenisiert. Man erhält eine flüssigkristalline Mischung, die aus einem Auslassventil am Boden der Mischtrommel direkt in Gebinde abgefüllt wird.

| Nr. | Substanz | Menge in 15 kg Mischung | Aggregatzustand bei 23 °C (RT) | Phase | Schmelzpunkt |
|---|---|---|---|---|---|
| 1 | reaktives Mesogen der Formel A | 0,04 kg | fest | kristallin | 147 °C |
| 2 | Mischung von Beispiel 1 | 14,96 kg | flüssig | nematisch | <-30 °C |

Das reaktive Mesogen der Formel A besitzt folgende Struktur:

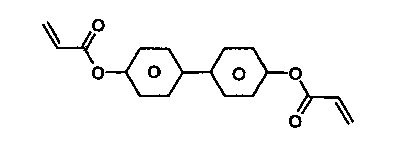

### Beispiel 3

Bei der Herstellung einer TN-TFT-Mischung werden die nachfolgend genannten Einzelsubstanzen Nr. 1-14 und ein chiraler Dotierstoff Nr. 15 in die Mischtrommel eines Schwingungsmischers, z. B. ein biaxialer Mischer der Fa. Collomix, gegeben und 60 Minuten bei Raumtemperatur homogenisiert. Man erhält 1,1 kg einer homogenen flüssigkristallinen Mischung, die aus einem Auslassventil am Boden der Mischtrommel direkt in Gebinde abgefüllt wird.

| Nr. | Substanz | Menge in 1,10 kg Mischung | Aggregatzustand bei 23 °C (RT) | Phase | Schmelzpunkt |
|---|---|---|---|---|---|
| 1 | BCH-3F.F | 0,132 kg | fest | kristallin | 66 °C |
| 2 | BCH-5F.F | 0,110 kg | fest | kristallin | 55 °C |
| 3 | ECCP-30CF3 | 0,055 kg | fest | kristallin | 60 °C |
| 4 | ECCP-50CF3 | 0,055 kg | fest | kristallin | 44 °C |
| 5 | CBC-33F | 0,022 kg | fest | kristallin | 133 °C |
| 6 | CBC-53F | 0,022 kg | fest | kristallin | 86 °C |
| 7 | CBC-55F | 0,022 kg | fest | kristallin | 85 °C |
| 8 | PCH-6F | 0,088 kg | fest | kristallin | 35 °C |
| 9 | PCH-7F | 0,066 kg | fest | kristallin | 36 °C |
| 10 | CCP-20CF3 | 0,088 kg | fest | kristallin | 42 °C |
| 11 | CCP-30CF3 | 0,132 kg | fest | kristallin | 39 °C |
| 12 | CCP-40CF3 | 0,077 kg | fest | kristallin | 62°C |
| 13 | CCP-50CF3 | 0,121 kg | fest | kristallin | 52 °C |
| 14 | PCH-5F | 0,110 kg | fest | kristallin | 34 °C |
| 15 | S-2011 | 0,001 kg | flüssig | smektisch | 19 °C |

### Beispiel 4

Zu Herstellung einer PS-VA-Mischung (PS = polymer stabilized) werden die Einzelsubstanzen aus Beispiel 1 mit einem reaktiven Mesogen der Formel B in einem Schwingungsmischer, z.B. ein biaxialer Mischer der Fa. Collomix, gegeben und 90 Minuten bei Raumtemperatur homogenisiert. Man erhält eine flüssigkristalline Mischung, die aus einem Auslassventil am Boden der Mischtrommel direkt in Gebinde abgefüllt wird.

| Nr. | Substanz | Menge in 15 kg Mischung | Aggregatzustand bei 23 °C (RT) | Phase | Schmelzpunkt |
|---|---|---|---|---|---|
| 1 | reaktives Mesogen der Formel B | 0,04 kg | fest | kristallin | 152 °C |
| 2 | Mischung von Beispiel 1 | 14,96 kg | flüssig | nematisch | <-30 °C |

Das reaktive Mesogen der Formel B besitzt folgende Struktur:

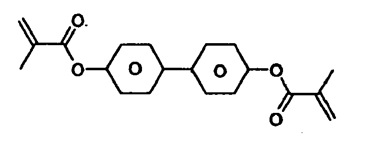

Die nach dem erfindungsgemäßen Verfahren hergestellten Flüssigkristallmischungen der Beispiele 1, 2, 3 und 4, hergestellt aus den genannten Einzelsubstanzen, zeichnen sich durch eine verbesserte Homogenität und höhere Reinheit aus verglichen mit dem Ergebnis, wenn die Mischungen nach den herkömmlichen Verfahren (Rührwerk, externe Wärmezufuhr) hergestellt werden.

## Patentansprüche

1. Verfahren zur Herstellung einer homogenen flüssigen Mischung aus mindestens zwei organischen Substanzen, wobei mindestens eine der beteiligten Substanzen bei Raumtemperatur in fester Form vorliegt und die zu mischenden Substanzen bei einer Temperatur, die geringer als die Schmelztemperatur der mindestens einen in fester Form vorliegenden Substanz ist, durch intensives Vermengen in einer rotierenden Mischtrommel (4) verflüssigt und homogenisiert werden.

2. Verfahren nach Anspruch 1, **dadurch gekennzeichnet, dass** die zu mischenden Substanzen mittels eines Schwingungsmischers homogenisiert werden.

3. Verfahren nach Anspruch 1 oder 2, **dadurch gekennzeichnet, dass** die zu mischenden Substanzen in einer Mischtrommel durch biaxiales Verschwenken oder Rotieren homogenisiert vermengt werden.

4. Verfahren nach einem oder mehreren der Ansprüche 1 bis 3,
**dadurch gekennzeichnet, dass** die Mischtrommel sich um zwei Achsen (7) und (8) dreht.

5. Verfahren nach einem oder mehreren der Ansprüche 1 bis 4,
**dadurch gekennzeichnet, dass** die Mischtrommel an den Wänden und/oder am Deckel nach innen ragende Einbauten und/oder Stromstörer aufweist.

6. Verfahren nach einem oder mehreren der Ansprüche 1 bis 5,
**dadurch gekennzeichnet, dass** der Homogenisierungsprozess mittels Sensoren erfasst und/oder gesteuert wird.

7. Verfahren nach einem oder mehreren der Ansprüche 1 bis 6,
**dadurch gekennzeichnet, dass** die mindestens zwei organischen Substanzen jeweils mesogene Verbindungen sind.

8. Verfahren nach einem oder mehreren der Ansprüche 1 bis 7,
**dadurch gekennzeichnet, dass** die mesogenen Verbindungen eine oder mehrere flüssigkristalline Verbindungen umfassen.

9. Verfahren nach einem oder mehreren der Ansprüche 1 bis 8,
**dadurch gekennzeichnet, dass** die organischen Substanzen in Gegenwart von einem oder mehreren Hilfsstoffen ausgewählt aus der Gruppe der Antioxidantien, UV-Stabilisatoren, Radikalfänger, dichroitische Farbstoffe, Nanopartikel, Mikropartikel und Dotierstoffe homogenisiert werden.

10. Verfahren nach einem oder mehreren der Ansprüche 1 bis 9,
**dadurch gekennzeichnet, dass** es sich bei den mindestens zwei organischen Substanzen jeweils um mesogene und/oder flüssigkristalline Verbindungen handelt, die aus den Verbindungen der Formel I 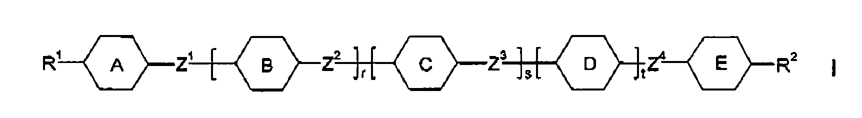 worin
R¹ und R² jeweils unabhängig voneinander H, einen unsubstituierten, einen einfach durch CN oder CF₃ oder mindestens einfach durch Halogen substituierten Alkylrest mit bis zu 15 C-Atomen, wobei in diesen Resten auch eine oder mehrere CH₂-Gruppen durch -O- -S-, 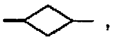 -C≡C-, -CH=CH-, -CF₂O-, -OCF₂-, -OC-O- oder -O-CO- so ersetzt sein können, dass O-Atome nicht direkt miteinander verknüpft sind, und einer der Reste R¹, R² auch F, Cl, CN, SF₅, NCS, SCN, OCN,
Ringe A, B, C, D, E jeweils unabhängig voneinander 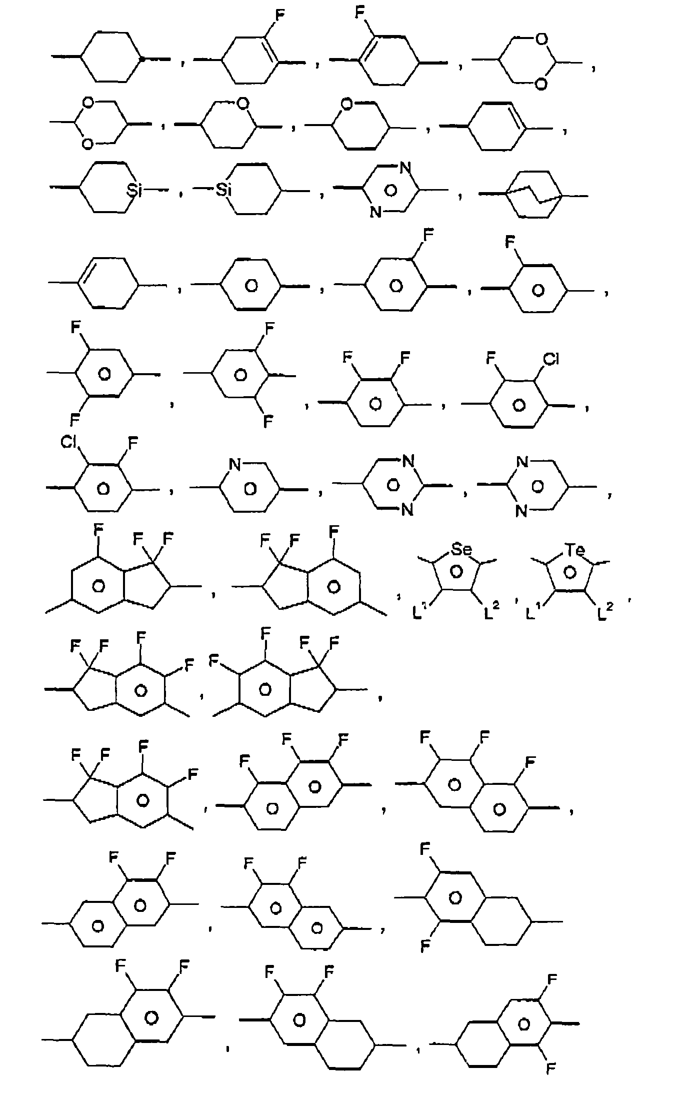 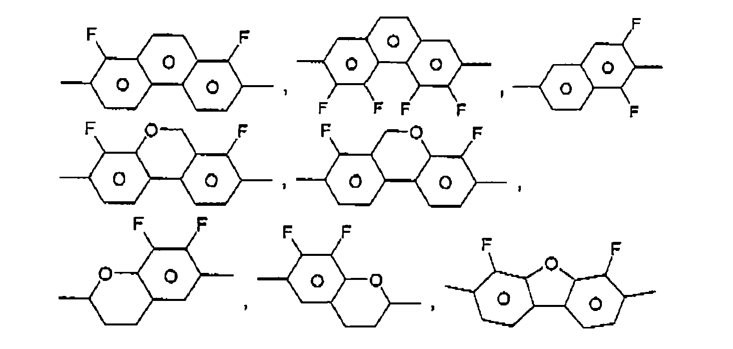
r, s und t jeweils unabhängig voneinander 0, 1, 2 oder 3, wobei r + s+ t ≤ 3 ist, und
Z¹⁻⁴ jeweils unabhängig voneinander -CO-O-, -O-CO-, -CF₂O-, -OCF₂-, -CH₂O-, -OCH₂-, -CH₂CH₂-, -(CH₂)₄-, -CH=CH-CH₂O-, -C₂F₄-, -CH₂CF₂-, -CF₂CH₂-, -CF=CF-, -CH=CF-, -CF=CH-, -CH=CH-, -C≡C- oder eine Einfachbindung,
L¹ und L² jeweils unabhängig voneinander H oder F
bedeuten,
ausgewählt sind.

11. Verwendung des Verfahrens nach einem oder mehreren der Ansprüche 1 bis 10 zur Herstellung von Flüssigkristallmischungen.

12. Verwendung des Verfahrens nach Anspruch 11 zur Herstellung von ECB-, VAN-, IPS-, FFS-, TN-, TN-TFT-, STN-, OCB-, GH-, PS-VA- oder ASM-VA-Flüssigkdstallmischungen.

## Claims

1. Process for the preparation of a homogeneous liquid mixture of at least two organic substances, where at least one of the substances involved is in solid form at room temperature, and the substances to be mixed are liquefied and homogenised by vigorous mixing in a rotating mixing drum (4) at a temperature which is lower than the melting point of the at least one substance present in solid form.

2. Process according to Claim 1, **characterised in that** the substances to be mixed are homogenised by means of a vibration mixer.

3. Process according to Claim 1 or 2, **characterised in that** the substances to be mixed are homogenised in a mixing drum by biaxial swirling or rotation.

4. Process according to one or more of Claims 1 to 3, **characterised in that** the mixing drum rotates about two axes (7) and (8).

5. Process according to one or more of Claims 1 to 4, **characterised in that** the mixing drum has inwardly projecting internals and/or baffles on the walls and/or on the lid.

6. Process according to one or more of Claims 1 to 5, **characterised in that** the homogenisation process is recorded and/or controlled by means of sensors.

7. Process according to one or more of Claims 1 to 6, **characterised in that** the at least two organic substances are each mesogenic compounds.

8. Process according to one or more of Claims 1 to 7, **characterised in that** the mesogenic compounds include one or more liquid-crystalline compounds.

9. Process according to one or more of Claims 1 to 8, **characterised in that** the organic substances are homogenised in the presence of one or more assistants selected from the group of the antioxidants, UV stabilisers, free-radical scavengers, dichroic dyes, nanoparticles, microparticles and dopants.

10. Process according to one or more of Claims 1 to 9, **characterised in that** the at least two organic substances are each mesogenic and/or liquid-crystalline compounds selected from the compounds of the formula I 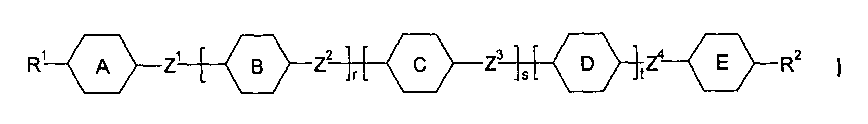 in which
R¹ and R² each, independently of one another, denote H, an alkyl radical having up to 15 C atoms which is unsubstituted, monosubstituted by CN or CF₃ or at least monosubstituted by halogen, where, in addition, one or more CH₂ groups in these radicals may be replaced by -O-, -S-, 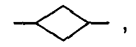 -C≡C-, -CH=CH-, -CF₂O-, -OCF₂-, -OC-O- or -O-CO- in such a way that O atoms are not linked directly to one another, and one of the radicals R¹, R² also denotes F, Cl, CN, SF₅, NCS, SCN, OCN,
rings A, B, C, D, E each, independently of one another, denote 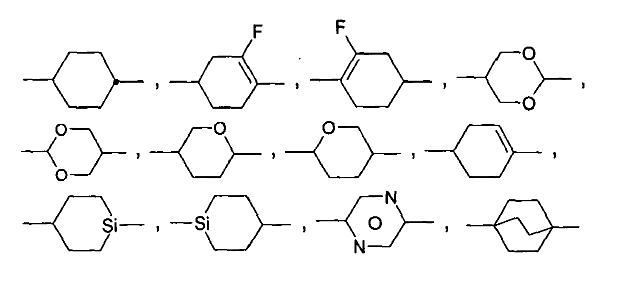 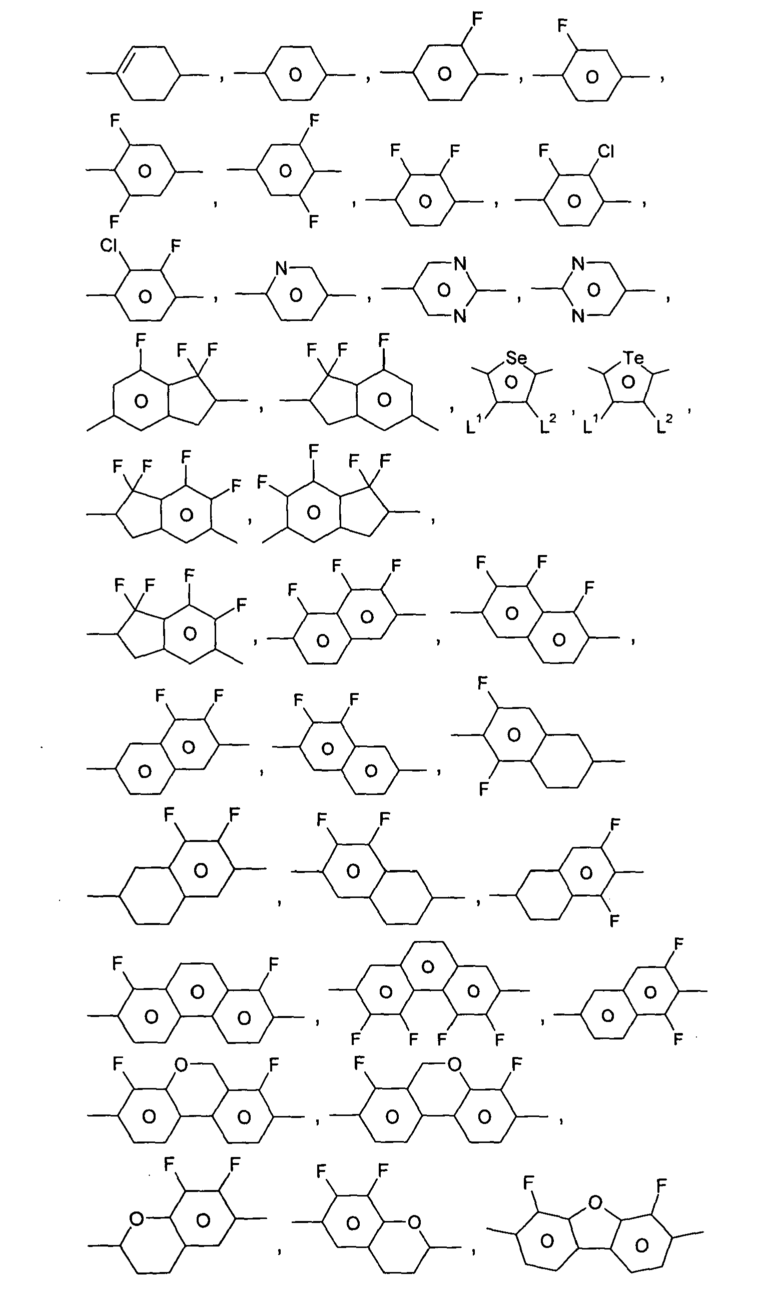
r, s and t each, independently of one another, denote 0, 1, 2 or 3, where r + s + t ≤ 3,
Z¹⁻⁴ each, independently of one another, denote -CO-O-, -O-CO-, -CF₂O-, -OCF₂-, -CH₂O-, -OCH₂-, -CH₂CH₂-, -(CH₂)₄-, -CH=CH-CH₂O-, -C₂F₄-, -CH₂CF₂-, -CF₂CH₂-, -CF=CF-, -CH=CF-, -CF=CH-, -CH=CH-, -C≡C- or a single bond,
L¹ and L² each, independently of one another, denote H or F.

11. Use of the process according to one or more of Claims 1 to 10 for the preparation of liquid-crystal mixtures.

12. Use of the process according to Claim 11 for the preparation of ECB, VAN, IPS, FFS, TN, TN-TFT, STN, OCB, GH, PS-VA or ASM-VA liquid-crystal mixtures.

## Revendications

1. Procédé pour la préparation d'un mélange de liquides homogène d'au moins deux substances organiques, où au moins l'une des substances mises en jeu est sous forme solide à température ambiante, et les substances destinées à être mélangées sont liquéfiées et homogénéisées par action de mélange vigoureuse dans un tambour de mélange tournant (4) à une température qui est inférieure au point de fusion d'au moins une substance présente sous forme solide.

2. Procédé selon la revendication 1, **caractérisé en ce que** les substances destinées à être mélangées sont homogénéisées au moyen d'un mélangeur à vibration.

3. Procédé selon la revendication 1 ou 2, **caractérisé en ce que** les substances destinées à être mélangées sont homogénéisées dans un tambour de mélange pa roscillation ou rotation biaxiale.

4. Procédé selon une ou plusieurs des revendications 1 à 3, **caractérisé en ce que** le tambour de mélange tourne autour de deux axes (7) et (8).

5. Procédé selon une ou plusieurs des revendications 1 à 4, **caractérisé en ce que** le tambour de mélange comporte des parties internes et/ou des chicanes faisant saillie vers l'intérieur sur les parois et/ou sur le couvercle.

6. Procédé selon une ou plusieurs des revendications 1 à 5, **caractérisé en ce que** le processus d'homogénéisation est enregistré et/ou contrôlé au moyen de capteurs.

7. Procédé selon une ou plusieurs des revendications 1 à 6, **caractérisé en ce que** les au moins deux substances organiques sont chacune des composés mésogènes.

8. Procédé selon une ou plusieurs des revendications 1 à 7, **caractérisé en ce que** les composés mésogènes incluent un ou plusieurs composés cristallins liquides.

9. Procédé selon une ou plusieurs des revendications 1 à 8, **caractérisé en ce que** les substances organiques sont homogénéisées en présence d'un ou de plusieurs assistants choisis parmi le groupe des antioxydants, des stabilisateurs UV, des désactivateurs de radicaux libres, des colorants dichroïques, des nanoparticules, des microparticules et des dopants.

10. Procédé selon une ou plusieurs des revendications 1 à 9, **caractérisé en ce que** les au moins deux substances organiques sont chacune des composés mésogènes et/ou cristallins liquides choisis parmi les composés de la formule I 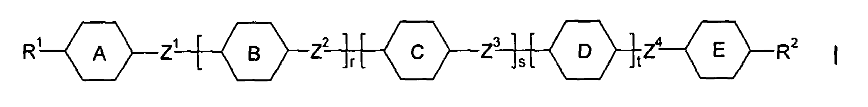 dans laquelle
R¹ et R² représentent, chacun indépendamment de l'autre, H, un radical alkyle comportant jusqu'à 15 atomes de C, lequel est non substitué, monosubstitué par CN ou CF₃ ou au moins monosubstitué par halogène, où, en outre, un ou plusieurs groupes CH₂ dans ces radicaux peuvent être remplacés par -O-, -S-, 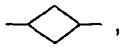 -C≡C-, -CH=CH-, -CF₂O-, -OCF₂-, -OC-O- ou -O-CO- de telle sorte que des atomes de O ne soient pas liés directement les uns aux autres, et l'un des radicaux R¹, R² représente également F, Cl, CN, SF₅, NCS, SCN, OCN,
les cycles A, B, C, D, E représentent, chacun indépendamment des autres, 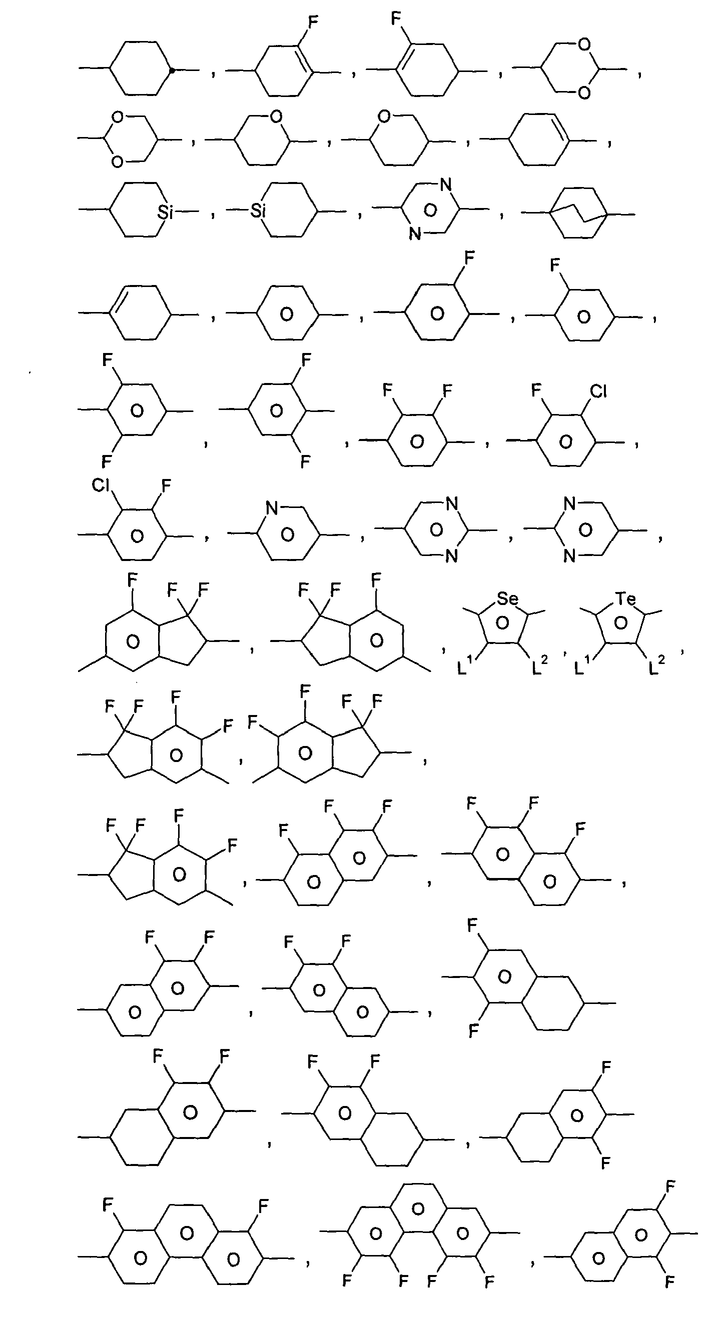 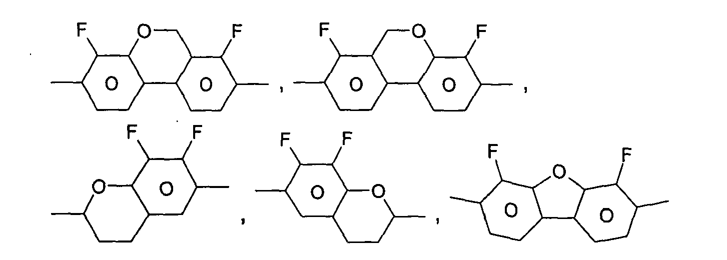
r, s et t représentent, chacun indépendamment des autres, 0, 1, 2 ou 3, où r + s + t ≤ 3,
Z¹⁻⁴ représentent, chacun indépendamment des autres, -CO-O-, -O-CO-, -CF₂O-, -OCF₂-, -CH₂O-, -OCH₂-, -CH₂CH₂-, -(CH₂)₄-, -CH=CH-CH₂O-, -C₂F₄-, -CH₂CF₂-, -CF₂CH₂-, -CF=CF-, -CH=CF-, -CF=CH-, -CH=CH-, -C=C- ou une liaison simple,
L¹ et L² représentent, chacun indépendamment de l'autre, H ou F.

11. Utilisation du procédé selon une ou plusieurs des revendications 1 à 10 pour la préparation de mélanges de cristaux liquides.

12. Utilisation du procédé selon la revendication 11 pour la préparation de mélanges de cristaux liquides ECB, VAN, IPS, FFS, TN, TN-TFT, STN, OCB, GH, PS-VA ou ASM-VA.
